# EUROPEAN PATENT SPECIFICATION

(11) **EP 3 925 292 B1**
(45) Date of publication and mention of the grant of the patent: **30.07.2025**
(21) Application number: 20708222.3
(22) Date of filing: 28.01.2020
(51) Int. Cl.: H04W 36/00, H04W 88/06, H04W 92/20

(54) **MULTI-CONNECTIVITY IN A WIRELESS COMMUNICATION NETWORK**
MEHRFACHKONNEKTIVITÄT IN EINEM DRAHTLOSKOMMUNIKATIONSNETZWERK
CONNECTIVITÉ MULTIPLE DANS UN RÉSEAU DE COMMUNICATION SANS FIL

(30) Priority: 11.02.2019 US 201962803906 P
(43) Date of publication of application: 22.12.2021
(73) Proprietor: Telefonaktiebolaget LM Ericsson (publ.), 16483 Stockholm (SE)
(72) Inventor: AGHIGHI, Meysam, 58752 Linköping (SE); FAXEN, Linnea, 582 14 Linköping (SE); SVEDEVALL, Sofia, 590 45 Brokind (SE); ENGSTRÖM, Stefan, 583 32 Linköping (SE)
(74) Representative: Ericsson
(86) International application number: PCT/SE2020/050065
(87) International publication number: WO 2020/167199

(56) References cited:
- US-A1- 2019 037 417
- HUAWEI ET AL: "SSB information correction in XnAP", vol. RAN WG3, no. Busan, Korea; 20180521 - 20180525, 28 May 2018 (2018-05-28), XP051527524, Retrieved from the Internet <URL:http://www.3gpp.org/ftp/tsg%5Fran/WG3%5FIu/TSGR3%5F100/Docs/R3%2D183378%2Ezip> [retrieved on 20180528]
- HUAWEI: "(TP for NR BL CR for TS38.423) ANR", vol. RAN WG3, no. Gothenburg, Sweden; 20180820 - 20180824, 28 August 2018 (2018-08-28), XP051528471, Retrieved from the Internet <URL:http://www.3gpp.org/ftp/tsg%5Fran/WG3%5FIu/TSGR3%5F101/Docs/R3%2D185142%2Ezip> [retrieved on 20180828]
- "3rd Generation Partnership Project; Technical Specification Group Radio Access Network; Evolved Universal Terrestrial Radio Access Network (E-UTRAN); X2 application protocol (X2AP) (Release 15)", 3GPP STANDARD; TECHNICAL SPECIFICATION; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.4.0, 14 January 2019 (2019-01-14), pages 1 - 409, XP051591701

## Description

### TECHNICAL FIELD

The present application relates generally to a wireless communication network, and relates more particularly to multi-connectivity in such a network.

### BACKGROUND

Multi-connectivity refers to the simultaneous connection of a wireless device (e.g., at a radio resource control, RRC, layer) to multiple different radio network nodes, or to multiple different cells served by different radio network nodes. For example, in multi-connectivity, a wireless device with multiple receivers (Rx) and/or transmitters (Tx) may utilize radio resources amongst one or more radio access technologies (e.g., New Radio, NR, and/or E-UTRA) provided by multiple distinct schedulers connected via a non-ideal backhaul. Multi-radio dual connectivity (MR-DC) in this regard is a generalization of Intra-E-UTRA DC, where a multiple Rx/Tx wireless device may be configured to utilize resources provided by two different nodes connected via a non-ideal backhaul, one providing NR access and the other one providing either E-UTRA or NR access. One node acts as the master node (MN) and the other as the SN. E-UTRAN for instance supports MR-DC via E-UTRA-NR dual connectivity (EN-DC), in which a wireless device is connected to one eNB that acts as a MN and one en-gNB that acts as a secondary node (SN). Either way, in MR-DC, the wireless device may have a single Radio Resource Control (RRC) state, based on the MN RRC and a single control plane connection towards the core network.

There may be some radio network nodes or cells, however, that are incapable of providing multi-connectivity. This may be because a radio network node or cell has old hardware or software, does not have the requisite license, does not have a coverage area that overlaps with the coverage area of another radio network node or cell, or the like. Under the existing paradigm, then, a wireless device that supports multi-connectivity may actually benefit from multi-connectivity only if the wireless device happens to end up being served by a radio network node or cell that is capable of providing multi-connectivity and that is not overloaded.

R3-185142, 3GPP TSG RAN WG3 Meeting #101 describes a Neighbour Information NR information element (IE) containing cell configuration information of NR cells that a neighbour NG-RAN node may need to operate its own served cells. The Neighbour Information NR IE contains a Connectivity Support IE used to indicate the connectivity supported by an NR cell, particularly, EN-DC Support.

US2019037417 discloses determining dual connectivity values for neighbor cells of a serving cell of a wireless network. A dual connectivity capability is determined of a wireless device that engages in wireless communications coordinated by the serving cell. A target cell of the neighbor cells is determined based on a dual connectivity value. Initiation of a dual connectivity service is facilitated based on the wireless device via the target cell, wherein the target cell serves as a master cell of the dual connectivity service, and wherein the dual connectivity service includes exchanging user plane messages between the wireless device, the master cell and a secondary cell of the wireless network.

### SUMMARY

The invention is set out in the the appended set of claims.

### BRIEF DESCRIPTION OF THE DRAWINGS

Figure 1 is a block diagram of a wireless communication network according to some embodiments.
Figure 2 is a logic flow diagram of a method performed by a radio network node according to some embodiments.
Figure 3 is a logic flow diagram of a method performed by a radio network node according to other embodiments.
Figure 4 is a block diagram of a radio network node according to some embodiments.
Figure 5 is a block diagram of a radio network node according to other embodiments.
Figure 6 is a block diagram of a 5^{th} generation mobile radio access system with a 5^{th} generation core network, according to some embodiments.
Figure 7 is a block diagram of a Evolved Packet System according to some embodiments.
Figure 8 is a block diagram of E-UTRA-NR Dual Connectivity (EN-DC) according to some embodiments.
Figure 9 is a block diagram of a mobile moving to a new cell in E-UTRA-NR Dual Connectivity (EN-DC) according to some embodiments.
Figure 10 is a signaling flow diagram for the X2 Setup and eNB Configuration Update procedures according to some embodiments.
Figure 11 is a block diagram of a mobile moving to a new cell in E-UTRA-NR Dual Connectivity (EN-DC) where some cells are EN-DC capable but other cells are not EN-DC capable.
Figure 12 is a logic flow diagram of a method performed by an eNB serving a mobile according to some embodiments.
Figure 13 is a logic flow diagram of a method performed by an eNB neighbour to the eNB serving the mobile according to some embodiments.
Figure 14 is a block diagram showing radio control functions (RCFs) in a centralized computing environment according to some embodiments.
Figure 15 is a block diagram of a wireless communication network according to some embodiments.
Figure 16 is a block diagram of a user equipment according to some embodiments.
Figure 17 is a block diagram of a virtualization environment according to some embodiments.
Figure 18 is a block diagram of a communication network with a host computer according to some embodiments.
Figure 19 is a block diagram of a host computer according to some embodiments.
Figure 20 is a flowchart illustrating a method implemented in a communication system, in accordance with one embodiment.
Figure 21 is a flowchart illustrating a method implemented in a communication system, in accordance with one embodiment.
Figure 22 is a flowchart illustrating a method implemented in a communication system, in accordance with one embodiment.
Figure 23 is a flowchart illustrating a method implemented in a communication system, in accordance with one embodiment.

### DETAILED DESCRIPTION

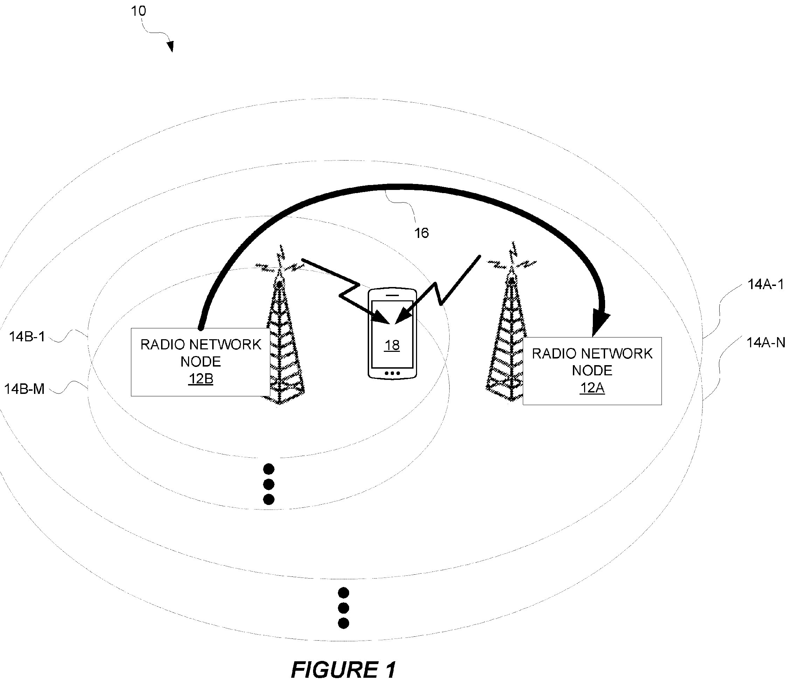

Figure 1 shows a wireless communication network 10 according to some embodiments. The network 10 as shown includes radio network nodes 12A and 12B (e.g., in the form of base stations). The radio network nodes 12A and 12B may be included in a radio access network (RAN) portion of the network 10, which may in turn connect to a core network (CN) portion (not shown).

Each radio network node 12A, 12B serves one or more cells. As shown, for example, radio network node 12A serves N cells 14A-1,...14A-N, for N ≥ 1, and radio network node 12B serves M cells 14B-1,...14B-M, for M ≥ 1. Different cells may for instance be provided on different carrier frequencies, with different frequency bandwidths, and/or using different radio access technologies.

In some embodiments, radio network node 12B is configured to transmit control signaling 16 to radio network node 12A, e.g., directly over an interface (e.g., X2AP) established between the radio network nodes 12A, 12B or indirectly via one or more intermediate nodes (e.g., in the CN portion of the network 10). Radio network node 12A correspondingly receives this control signaling 16. The control signaling 16 according to some embodiments indicates whether radio network node 12B, or a cell served by radio network node 12B, supports so-called multi-connectivity. In one embodiment, for instance, the control signaling 16 indicates which cells served by the radio network node 12B, if any, support multi-connectivity.

Multi-connectivity in this regard refers to the simultaneous connection of a wireless device 18 (e.g., at a radio resource control, RRC, layer) to multiple different radio network nodes, or to multiple different cells served by different radio network nodes. The multiple different radio network nodes or cells may use the same radio access technology (e.g., both may use Evolved Universal Terrestrial Radio Access (E-UTRA) or both may use New Radio (NR)). Or, the multiple different radio network nodes or cells may use different radio access technologies, e.g., one may use E-UTRA and another may use NR.

In some embodiments, radio network node 12B, or a cell served by radio network node 12B, supports multi-connectivity if the radio network node 12B or the cell served by radio network node 12B has hardware and software capable of providing multi-connectivity. In other embodiments, radio network node 12B, or a cell served by radio network node 12B, supports multi-connectivity if the radio network node 12B or the cell served by radio network node 12B not only has this hardware and software capability but also has its multi-connectivity functionality activated, e.g., the functionality is switched on and/or the requisite license for the functionality is valid. In still other embodiments, radio network node 12B, or a cell served by radio network node 12B, supports multi-connectivity if the radio network node 12B or the cell served by radio network node 12B has hardware and software capability, has its multi-connectivity functionality activated, and has a coverage area which overlaps with or neighbours a coverage area provided by another radio network node or cell that supports multi-connectivity.

One example of multi-connectivity is dual connectivity (DC) in which the wireless device 18 is simultaneously connected to two different radio network nodes, or to two different cells served by two different radio network nodes. In this case, the wireless device 18 may be configured with a so-called master cell group (MCG) and a secondary cell group (SCG), where the MCG includes one or more cells served by the radio network node acting as a master node and the SCG includes one or more cells served by the radio network node acting as a secondary node. The master node may be a master in the sense that it controls the secondary node. For example, E-UTRA-NR (EN) DC refers to where the master node uses E-UTRA and the secondary node uses NR, whereas NR-E-UTRA (NE) refers to where the master node uses NR and the secondary node uses E-UTRA.

According to some embodiments, then, a cell supports multi-connectivity if the cell is able to be included in a MCG or SCG provided by a radio network node that supports multi-connectivity. And, in some embodiments, a radio network node supports multi-connectivity if the radio network node supports a wireless device connecting to the radio network node while the wireless device is also connected to another radio network node and/or if the radio network node is capable of acting as a master node or a secondary node.

Correspondingly, in embodiments where control signaling 16 indicates whether radio network node 12B supports multi-connectivity, the control signaling 16 may indicate if the radio network node 12B supports wireless device 18 connecting to the radio network node 12B while the wireless device 18 is also connected to another radio network node. And in embodiments where control signaling 16 indicates whether a cell served by radio network node 12B supports multi-connectivity, the control signaling 16 may indicate if the cell is able to be included in a MCG or SCG provided by radio network node 12B.

These latter embodiments may accommodate scenarios in which the radio network node 12 serves one or more cells that support multi-connectivity but also serves one or more cells that do not support multi-connectivity, e.g., because the cells rely on old hardware, do not have the requisite license, or do not have a need for the support due to not neighbouring another cell. In this case, then, the control signaling 16 may indicate which cells 14B-1,...14B-M served by radio network node 12B, if any, support multi-connectivity. Signaling multi-connectivity support on such a cell by cell basis may prove advantageous for discriminating between the cells on the basis of multi-connectivity support in the context of certain procedures, such as mobility procedures.

For example, in some embodiments, the radio network node 12A performs traffic steering based on the control signaling 16, i.e., based on whether radio network node 12B or a cell served by radio network node 12B supports multi-connectivity. The radio network node 12A may additionally or alternatively perform such traffic steering based on control signaling (not shown) received from the wireless device 18 indicating whether the wireless device 18 supports multi-connectivity.

In one or more embodiments, performing traffic steering based on multi-connectivity support may entail steering wireless devices (e.g., capable of multi-connectivity) to a radio network node or cell that supports multi-connectivity. Alternatively or additionally, such traffic steering may entail steering wireless devices (e.g., not capable of multi-connectivity) to a radio network node or cell that does not support multi-connectivity. In fact, multi-connectivity aware traffic steering herein may match wireless devices that support multi-connectivity with cells that support multi-connectivity and/or match wireless devices that do not support multi-connectivity with cells that do not support multi-connectivity. Such steering may advantageously conserve/reserve resources in cells that support multi-connectivity for devices that are actually capable of exploiting that multi-connectivity support. In this way, some embodiments avoid or mitigate increasing the load of cells that support multi-connectivity so much that multi-connectivity cannot be effectively provided to devices that support multi-connectivity. The embodiments may in turn help realize the maximum service performance improvements attributable to multi-connectivity support.

Additionally or alternatively to the embodiments above, the control signaling 16 may indicate whether a neighbour radio network node (not shown) that neighbours radio network node 12B, or a cell served by the neighbour radio network node, supports multi-connectivity. For example, the control signaling 16 may indicate that a cell (e.g., an NR cell) served by the neighbour radio network node can provide multi-connectivity (e.g., dual connectivity) together with a cell served by radio network node 12B. In these and other embodiments, then, the radio network node 12A may perform traffic steering additionally or alternatively based on neighbour support for multi-connectivity. Indeed, these embodiments may be based on the underlying rationale that the ability to actually use any multi-connectivity supported by radio network node 12B or a cell served by radio network node 12B requires that there be a neighbour radio network node or cell that also supports multi-connectivity.

For example, in some embodiments, the radio network node 12A steers wireless devices capable of multi-connectivity to a radio network node or cell that supports multi-connectivity and that has a neighbour radio network node or cell that also supports multi-connectivity. Alternatively or additionally, the radio network node 12A may steer wireless devices not capable of multi-connectivity to a radio network node or cell that does not support multi-connectivity, or to a radio network node or cell that supports multi-connectivity but that does not have a neighbour radio network node or cell that also supports multi-connectivity.

In still other embodiments, the control signaling 16 may indicate one or more carrier frequencies and/or one or more frequency bandwidths supported by a neighbour radio network node (not shown) neighbouring radio network node 12B or a cell served by the neighbour radio network node. In these and other embodiments, then, the radio network node 12A may perform traffic steering additionally or alternatively based on neighbour support for a carrier frequency and/or frequency bandwidth also supported by the wireless device 18. Indeed, these embodiments may be based on the underlying rationale that the ability to actually use any multi-connectivity supported by radio network node 12B or a cell served by radio network node 12B requires that there be a neighbour radio network node or cell that also supports multi-connectivity, and that the wireless device 18 be capable of using the neighbour's carrier frequency and/or frequency bandwidth.

For example, in some embodiments, the radio network node 12A steers a wireless device capable of multi-connectivity to a radio network node or cell that supports multi-connectivity and that has a neighbour radio network node or cell which supports a carrier frequency and/or frequency bandwidth also supported by the wireless device. Alternatively or additionally, the radio network node 12A steers a wireless device not capable of multi-connectivity to a radio network node or cell that does not support multi-connectivity or to a radio network node or cell that supports multi-connectivity but that does not have a neighbour radio network node or cell which supports a carrier frequency and/or frequency bandwidth also supported by the wireless device.

No matter the particular basis for traffic steering, the radio network node 12A may perform such traffic steering in any way that prompts, triggers, commands, encourages, biases, or otherwise directly or indirectly controls the radio network node or cell that a wireless device uses for transmitting or receiving traffic. In some embodiments, for instance, such traffic steering involves the radio network node 12A configuring certain condition(s) or threshold(s) (e.g., signal quality thresholds) that control the wireless device's mobility between radio network nodes and cells. Alternatively or additionally, such traffic steering may involve the radio network node 12A sending or causing to be sent traffic steering commands to the wireless device 18 that order the wireless device 18 to steer its traffic towards or away from a certain radio network node or cell.

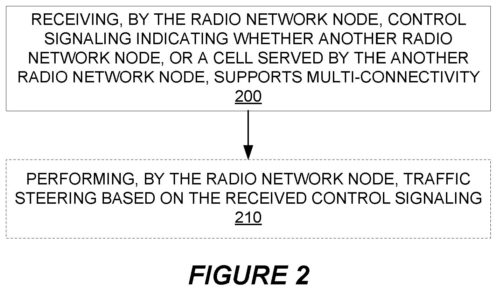

In view of the above modifications and variations, Figure 2 depicts a method performed by a radio network node 12A in accordance with particular embodiments. The method includes receiving, by the radio network node 12A, control signaling 16 indicating whether another radio network node 12B, or a cell served by the another radio network node 12B, supports multi-connectivity (Block 200). In some embodiments, for example, the control signaling 16 indicates whether radio network node 12B, or a cell served by radio network node 12B, supports multi-radio dual connectivity (DC), e.g., in the form of EN-DC or NE-DC.

In some embodiments, the method may also include performing, by the radio network node 12A, traffic steering based on the received control signaling 16. Such traffic steering may involve one or more of: steering wireless devices capable of multi-connectivity to a radio network node or cell that supports multi-connectivity; and steering wireless devices not capable of multi-connectivity to a radio network node or cell that does not support multi-connectivity.

In some embodiments, performing traffic steering based on the received control signaling comprises one or more of: steering wireless devices capable of multi-connectivity to a radio network node or cell that supports multi-connectivity and that has a neighbour radio network node or cell (e.g., using NR) that also supports multi-connectivity; and steering wireless devices not capable of multi-connectivity to a radio network node or cell that does not support multi-connectivity or to a radio network node or cell (e.g., using NR) that supports multi-connectivity but that does not have a neighbour radio network node or cell that also supports multi-connectivity.

In some embodiments, performing traffic steering based on the received control signaling comprises one or more of: steering a wireless device capable of multi-connectivity to a radio network node or cell that supports multi-connectivity and that has a neighbour radio network node or cell (e.g., using NR) which supports a carrier frequency and/or frequency bandwidth also supported by the wireless device; and steering a wireless device not capable of multi-connectivity to a radio network node or cell that does not support multi-connectivity or to a radio network node or cell that supports multi-connectivity but that does not have a neighbour radio network node or cell (e.g., using NR) which supports a carrier frequency and/or frequency bandwidth also supported by the wireless device.

In some embodiments, the control signaling 16 further indicates whether a neighbour radio network node that neighbours the another radio network node, or a cell served by the neighbour radio network node, supports multi-connectivity. Alternatively or additionally, in some embodiments, the control signaling 16 further indicates one or more carrier frequencies and/or one or more frequency bandwidths supported by a neighbour radio network node neighbouring the another radio network node or a cell served by the neighbour radio network node. In either case, the neighbour radio network node, or the cell served by the neighbour radio network node, in some embodiments uses New Radio, NR.

In some embodiments, the method comprises receiving the control signaling 16 from the another radio network node.

In some embodiments, the method comprises receiving the control signaling 16 during a procedure for setting up an interface or connection between the radio network node and the another radio network node. In one such embodiment, the control signaling 16 comprises or is included in a Setup Request message of the procedure or a Setup Response message of the procedure.

In some embodiments, the method comprises receiving the control signaling 16 during a procedure for updating the radio network node about a change to a configuration of the another radio network node or a cell served by the another radio network node. In one such embodiment, the control signaling 16 comprises or is included in a Configuration Update message of the procedure.

In some embodiments, at least a portion of the control signaling 16 comprises or is included in a Served Cell Information information element of a message.

In some embodiments, at least a portion of the control signaling 16 comprises or is included in an NR Neighbour Information information element of a message.

In some embodiments, said multi-connectivity comprises dual connectivity.

In some embodiments, said multi-connectivity comprises multi-radio dual connectivity.

In some embodiments, said multi-connectivity comprises E-UTRA-NR, EN, dual connectivity. In other embodiments, said multi-connectivity comprises NR-E-UTRA, NE, dual connectivity.

In some embodiments, the radio network node uses E-UTRA and is an enhanced Node B, eNB.

In some embodiments, the another radio network node uses E-UTRA and is an enhanced Node B, eNB.

In some embodiments, the control signaling 16 indicates whether a cell served by the another radio network node supports multi-connectivity.

In some embodiments, the control signaling 16 indicates which cells served by the another radio network node, if any, support multi-connectivity connectivity.

In some embodiments, the control signaling 16 further indicates capabilities of a neighbour radio network node that neighbours the another radio network node, or of a cell served by the neighbour radio network node.

In some embodiments, the capabilities include one or more of: a number of multiple-input-multiple-output, MIMO, layers supported; an average provided bitrate; sub-carrier spacing supported; carrier frequencies supported; and frequency bandwidth supported.

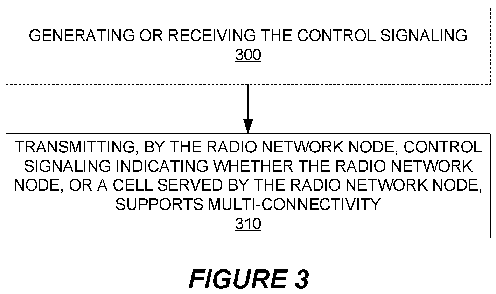

Figure 3 depicts a method performed by a radio network node 12B in accordance with other particular embodiments. The method includes transmitting, by the radio network node 12B, control signaling 16 indicating whether the radio network node 12B, or a cell served by the radio network node 12B, supports multi-connectivity (Block 310). In some embodiments, for example, the control signaling 16 indicates whether radio network node 12B, or a cell served by radio network node 12B, supports multi-radio dual connectivity (DC), e.g., in the form of EN-DC or NE-DC. Regardless, the method in some embodiments may also include generating or receiving the control signaling 16 (Block 300).

In some embodiments, the control signaling 16 further indicates whether a neighbour radio network node that neighbours the radio network node, or a cell served by the neighbour radio network node, supports multi-connectivity. Alternatively or additionally, in some embodiments, the control signaling 16 further indicates one or more carrier frequencies and/or one or more frequency bandwidths supported by a neighbour radio network node neighbouring the radio network node or a cell served by the neighbour radio network node. In either case, the neighbour radio network node, or the cell served by the neighbour radio network node, in some embodiments uses New Radio, NR.

In some embodiments, the method comprises transmitting the control signaling 16 to another radio network node. In one such embodiment, the method comprises transmitting the control signaling 16 during a procedure for setting up an interface or connection between the radio network node and the another radio network node. For example, in some embodiments, the control signaling 16 comprises or is included in a Setup Request message of the procedure or a Setup Response message of the procedure. In other embodiments, the method comprises transmitting the control signaling 16 during a procedure for updating the another radio network node about a change to a configuration of the radio network node or a cell served by the radio network node. For example, in some embodiments, the control signaling 16 comprises or is included in a Configuration Update message of the procedure.

In some embodiments, at least a portion of the control signaling 16 comprises or is included in a Served Cell Information information element of a message.

In some embodiments, at least a portion of the control signaling 16 comprises or is included in an NR Neighbour Information information element of a message.

In some embodiments, said multi-connectivity comprises dual connectivity.

In some embodiments, said multi-connectivity comprises multi-radio dual connectivity.

In some embodiments, said multi-connectivity comprises E-UTRA-NR, EN, dual connectivity. In other embodiments, said multi-connectivity comprises NR-E-UTRA, NE, dual connectivity.

In some embodiments, the radio network node uses E-UTRA and is an enhanced Node B, eNB.

In some embodiments, the another radio network node uses E-UTRA and is an enhanced Node B, eNB.

In some embodiments, the control signaling 16 indicates whether a cell served by the another radio network node supports multi-connectivity.

In some embodiments, the control signaling 16 indicates which cells served by the another radio network node, if any, support multi-connectivity connectivity.

In some embodiments, the control signaling 16 further indicates capabilities of a neighbour radio network node that neighbours the another radio network node, or of a cell served by the neighbour radio network node.

In some embodiments, the capabilities include one or more of: a number of multiple-input-multiple-output, MIMO, layers supported; an average provided bitrate; sub-carrier spacing supported; carrier frequencies supported; and frequency bandwidth supported.

Although the methods in Figures 2 and 3 were described for simplicity as being performed by radio network nodes 12A and 12B, respectively, the radio network nodes 12A, 12B may each be configured to perform both methods. For example, in some embodiments, the radio network nodes 12A, 12B are configured to exchange control signaling 16 with each other, so that each of the radio network nodes 12A, 12B indicates to the other whether the radio network node (or a cell supported by the radio network node) supports multi-connectivity. Similarly, each of the radio network nodes 12A, 12B may be configured to perform traffic steering based on the control signaling that the radio network node receives.

Embodiments herein also include corresponding apparatuses. Embodiments herein for instance include a wireless device 18 configured to perform any of the steps of any of the embodiments described above for the wireless device 18.

Embodiments also include a wireless device 18 comprising processing circuitry and power supply circuitry. The processing circuitry is configured to perform any of the steps of any of the embodiments described above for the wireless device 18. The power supply circuitry is configured to supply power to the wireless device 18.

Embodiments further include a wireless device 18 comprising processing circuitry. The processing circuitry is configured to perform any of the steps of any of the embodiments described above for the wireless device 18. In some embodiments, the wireless device 18 further comprises communication circuitry.

Embodiments further include a wireless device 18 comprising processing circuitry and memory. The memory contains instructions executable by the processing circuitry whereby the wireless device 18 is configured to perform any of the steps of any of the embodiments described above for the wireless device 18.

Embodiments moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the embodiments described above for the wireless device. In some embodiments, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Embodiments herein also include a radio network node 12A or 12B configured to perform any of the steps of any of the embodiments described above for the radio network node 12A or 12B.

Embodiments also include a radio network node 12A or 12B comprising processing circuitry and power supply circuitry. The processing circuitry is configured to perform any of the steps of any of the embodiments described above for the radio network node 12A or 12B. The power supply circuitry is configured to supply power to the radio network node 12A or 12B.

Embodiments further include a radio network node 12A or 12B comprising processing circuitry. The processing circuitry is configured to perform any of the steps of any of the embodiments described above for the radio network node 12A or 12B. In some embodiments, the radio network node 12A or 12B further comprises communication circuitry.

Embodiments further include a radio network node 12A or 12B comprising processing circuitry and memory. The memory contains instructions executable by the processing circuitry whereby the radio network node 12A or 12B is configured to perform any of the steps of any of the embodiments described above for the radio network node 12A or 12B.

More particularly, the apparatuses described above may perform the methods herein and any other processing by implementing any functional means, modules, units, or circuitry.In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

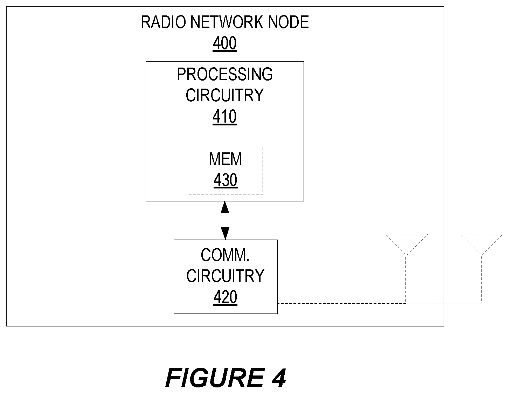

Figure 4 for example illustrates a radio network node 400 (e.g., radio network node 12A) as implemented in accordance with one or more embodiments. As shown, the radio network node 400 includes processing circuitry 410 and communication circuitry 420. The communication circuitry 420 (e.g., radio circuitry) is configured to transmit and/or receive information to and/or from one or more other nodes, e.g., via any communication technology. Such communication may occur via one or more antennas that are either internal or external to the wireless device 400. The processing circuitry 410 is configured to perform processing described above, e.g., in Figure 2, such as by executing instructions stored in memory 430. The processing circuitry 410 in this regard may implement certain functional means, units, or modules.

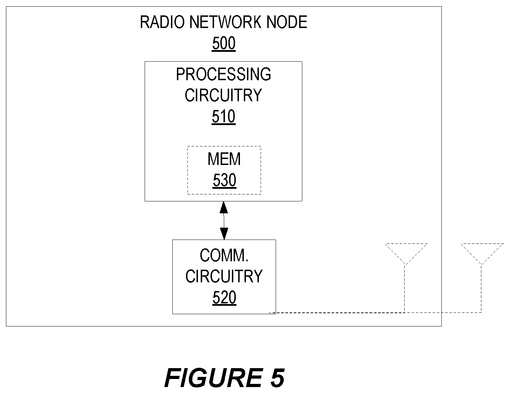

Figure 5 illustrates a radio network node 500 (e.g., radio network node 12B) as implemented in accordance with one or more embodiments. As shown, the network node 500 includes processing circuitry 510 and communication circuitry 520. The communication circuitry 520 is configured to transmit and/or receive information to and/or from one or more other nodes, e.g., via any communication technology. The processing circuitry 510 is configured to perform processing described above, e.g., in Figure 3, such as by executing instructions stored in memory 530. The processing circuitry 510 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described. Some embodiments for instance are described below in an example context where the multi-connectivity above takes the form of EN-DC.

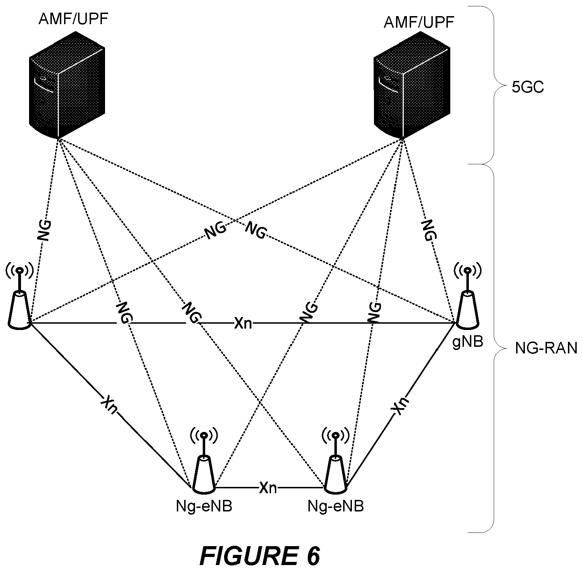

The third generation partnership project (3GPP) is currently working on standardization of the 5th generation of mobile radio access system, also called NG Radio Access Network (NG-RAN). The NG-RAN may include nodes providing radio connections according to the standard for the new 5th generation radio access (New Radio, NR), as well as nodes providing radio connections according to the Long-Term Evolution (LTE) standard. The NG-RAN needs to be connected to some network that provides non-access stratum (NAS) functions and connection to communication networks outside NG-RAN, like the internet. For NG-RAN nodes, the 5th Generation Core Network (5GC) is used. This is shown in Figure 6 as including core network (CN) nodes in the form of an Access and Mobility Management Function (AMF) and a User Plane Function (UPF), as specified by 3GPP.

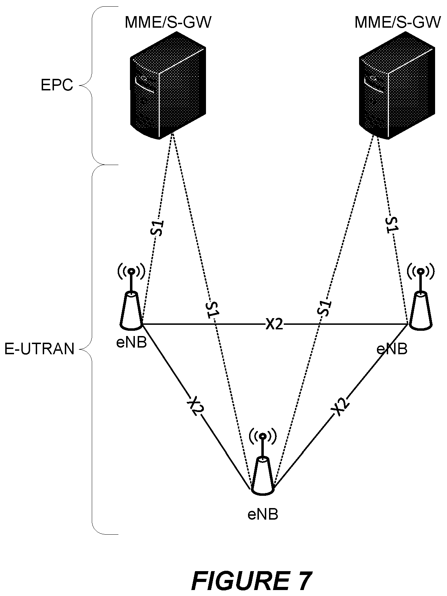

5G with NR and NG-RAN is introduced as an evolution of the Evolved Packet System (EPS) which consists of the Evolved Packet Core (EPC) and Evolved-Universal Terrestrial Radio Access Network (E-UTRAN). The architecture of E-UTRAN, with interface to EPC, is shown in Figure 7.

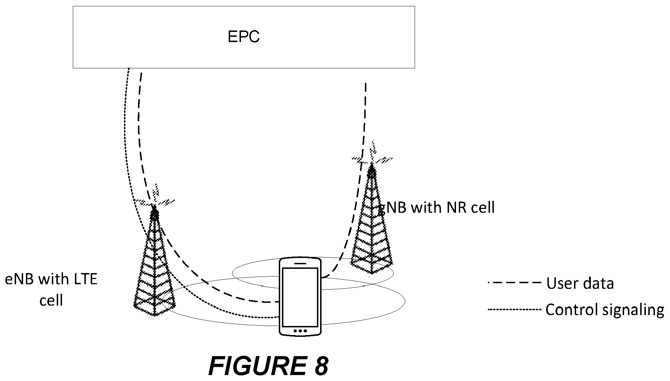

To improve the connection for a mobile, the mobile can be connected simultaneously using NR and LTE. The user data can then be sent using both technologies. Depending on what core network is used, either the eNB or the gNB is the master node and handles the signaling connection to the CN. An example is shown in Figure 8, where the CN is EPC and the eNB is the master node. By using the eNB as master node, NR can be introduced in the network without having to introduce the 5GC. This variant of combining LTE and NR is in 3GPP referred to as E-UTRA-NR Dual Connectivity (EN-DC).

In the deployments of EN-DC, not every LTE cell will be EN-DC capable (reasons could be having old hardware, not having license or no NR deployment in that area). This means that only some eNBs on some LTE frequency layers will be EN-DC capable. For example, an operator could have many EN-DC capable eNBs on low-band frequencies while having no EN-DC capable eNBs on mid/high-band.

At the same time, not every user mobile will be EN-DC capable (reasons could be having an old mobile phone or not having a 5G subscription). Still, it is desired that all mobiles with capability for NR will use EN-DC when it benefits the service, since capacity and performance are expected to be significantly better when using NR. That is also the only way for the operator to make use of their new investments in NR spectrum when they have not invested in a 5GC.

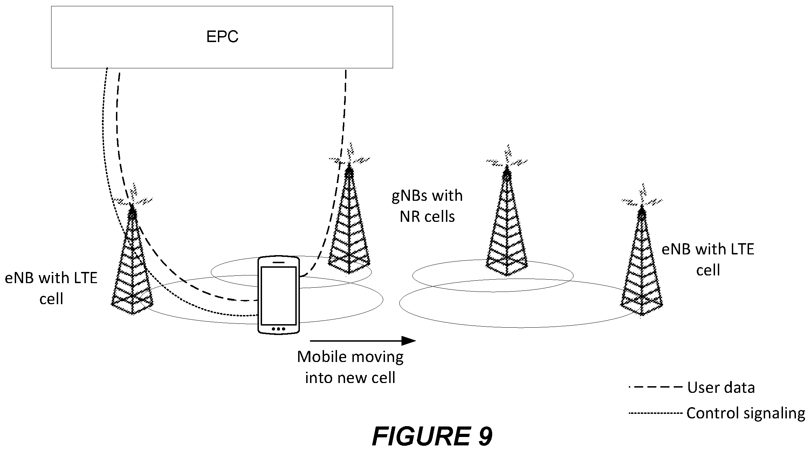

The main task of a mobile radio network is to provide good radio connections for mobile devices (mobiles) to carry the services the users of the mobile want to utilize. In this process, it is central to find the most suitable cells or antenna beams for every mobile as it moves around. This is today performed by requesting the mobile to measure the strength and quality of radio signals from the serving beams as well from neighbour beams. The results of the measurements are reported to the RAN, which takes a decision on what cells shall serve the mobile in the following. See Figure 9.

Mobile is here used as the term for the equipment terminating the wireless connection from the base station. It need not be moving, but can be stationary and can also be referred to as e.g. Station, Mobile Station or User Equipment (UE).

When a connection is setup between two RAN nodes in E-UTRAN or NG-RAN, information is exchanged about the served cells in the respective node. The information may, for example, include identities, frequency and bandwidth of the cell, as well as the neighbour cells of the served cell. In the receiving node, the information can be used in the decision where to move a mobile that is reaching the border of a serving cell or ends its connection. For example, the bandwidth can be vital for certain services and a mobile with such a service can only be moved to a cell with enough bandwidth.

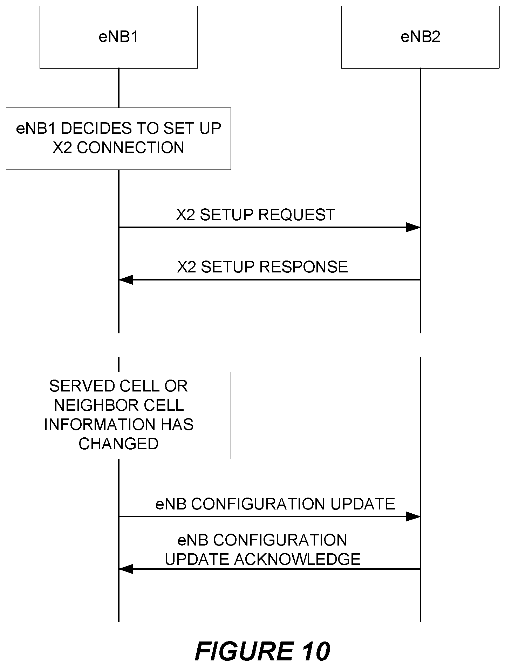

In E-UTRAN this cell information is exchanged over the X2 connection, using the X2 Setup or eNB Configuration Update procedures. See Figure 10 for signaling flow diagrams of these procedures.

There currently exist certain challenge(s). Today it is not possible to know, for an eNB serving a mobile, whether neighbour cells controlled by other eNBs are capable of providing EN-DC connections. Therefore mobiles that would benefit from EN-DC may unnecessarily be moved to cells that cannot provide EN-DC, which leads to a less good or failed service for the mobile.

Even though a mobile can perform EN-DC, it may not be capable of using all available NR frequencies for EN-DC. To ensure that a mobile can use EN-DC in a target cell, the frequencies of the target cell's neighbour NR cells must be known. This is not the case today.

Also many mobiles that cannot perform EN-DC may heretofore unintentionally be moved to an EN-DC capable cell, increasing the cell load so that EN-DC cannot be provided to EN-DC capable mobiles.

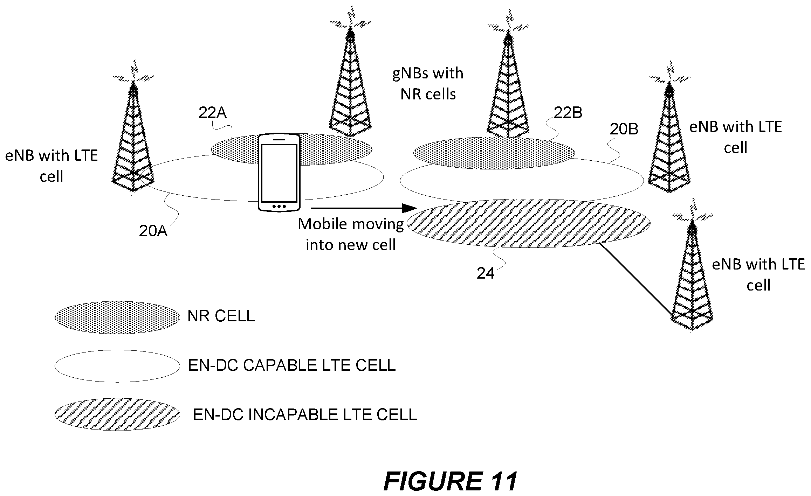

An example scenario is shown in Figure 11. In this example scenario, a mobile is served by an LTE cell 20A. This LTE cell 20A is an EN-DC capable cell and overlaps in coverage with an NR cell 22A. LTE cell 20A also has neighbouring cells, including an EN-DC capable LTE cell 20B, an EN-DC incapable LTE cell 24, and an NR cell 22B. Both of the neighbouring LTE cells 20B and 24 have coverage areas that overlap the coverage area of the neighbouring NR cell 22B. When the mobile moves into the area, then, a risk heretofore exists that the mobile would be undesirably moved to EN-DC capable LTE cell 20B even if the mobile does not support or would not benefit from EN-DC. Similarly, a risk heretofore exists that the mobile would be undesirably moved to EN-DC uncapable LTE cell 24 even if the mobile supports and/or would benefit from EN-DC.

To solve this with current means, the operator would need to configure all detected neighbour LTE cells with the information about EN-DC capability and about neighbour NR cells. In a live network, the set of neighbour cells is not stable over time, but neighbour cells are detected and removed all the time, when changes are made in the network. It would therefore be a continuous task for the operator to keep the configuration about EN-DC capability up to date.

Certain aspects of the present disclosure and their embodiments may provide solutions to these or other challenges. Some embodiments provide EN-DC aware traffic steering. To facilitate this or other advantages, some embodiments add EN-DC related information to X2AP, i.e. one eNB tells its neighbour eNBs whether it has EN-DC capable cells or not and for each of the EN-DC capable cells, gives information about its NR neighbour cells.

The following solution is presented in an EN-DC context with communication between eNBs, but can be valid also in other radio access networks. One other example is NE-DC, with the corresponding communication between gNBs.

Generally, then, for EN-DC aware traffic steering in LTE, i.e. for steering EN-DC UEs to camp on and connect to EN-DC capable LTE layers, some embodiments provide an eNB with information on EN-DC capability of LTE cells on neighbour eNBs. Moreover, the steering of EN-DC capable UEs is enhanced by some embodiments by providing more information to the eNB, i.e. information on NR neighbour cells and their bandwidths.

Certain embodiments may provide one or more of the following technical advantage(s). Providing information regarding EN-DC capable cells and their NR neighbours in inter-eNB X2 messages will enable the operators to have smart EN-DC aware traffic steering in LTE after deployment of EN-DC. With the knowledge of EN-DC capability for all neighbour LTE cells, and knowledge of their supported NR neighbours, it will be possible for the system to direct EN-DC capable UEs to an LTE cell where EN-DC with NR can be setup. Additionally or alternatively, the system can avoid moving mobiles that do not benefit from EN-DC to EN-DC capable LTE cells, thereby freeing up resources for mobiles that benefit from EN-DC and increasing the total offered capacity of the system.

In view of the embodiments above, the present disclosure generally includes the following embodiments, e.g., which may address one or more of the issues disclosed herein. According to some embodiments, a method is performed by a radio network node (e.g., a base station). The method includes receiving, by the radio network node, control signaling indicating whether another radio network node, or a cell served by the another radio network node, supports multi-connectivity (e.g., EN-DC). In some embodiments, the method also includes performing, by the radio network node, traffic steering based on the received control signaling. This may include for instance steering wireless devices capable of multi-connectivity to a radio network node or cell that supports multi-connectivity; and/or steering wireless devices not capable of multi-connectivity to a radio network node or cell that does not support multi-connectivity.

Embodiments also include a method performed by a radio network node that includes transmitting, by the radio network node, control signaling indicating whether the radio network node, or a cell served by the radio network node, supports multi-connectivity (e.g., EN-DC).

Some embodiments propose that radio network nodes (e.g., base stations) exchange one or more of the following kinds of information (e.g., via control signaling 16 described above): information on if neighbour LTE cells support EN-DC connections, information on if the NR neighbours to the neighbour LTE cell supports EN-DC, and/or information on frequency and bandwidth for these neighbour NR cells. This may advantageously enable the use of EN-DC in a more efficient way.

For example, this new information exchange enables the system in some embodiments to steer mobiles that benefit from EN-DC to EN-DC capable cells and/or to steer mobiles that do not benefit from EN-DC to other cells. The information will further make it possible in some embodiments to, in advance of any decision for a mobile, estimate the benefit of EN-DC in a target cell, depending on the bandwidth of the neighbour NR cell. The information alternatively or additionally may further make it possble to, in advance of any decision for a mobile, determine if a target neighbour NR cell is possible to use for EN-DC for a specific mobile considering the capabilties of that mobile. The capabilities could e.g. be the ability to use certain frequencies or frequency bands in combination with the neighbour LTE cell.

The described improved steering of the mobiles may also result in a better usage of the network resources and an increased network capacity.

In some embodiments, an eNB controlling LTE cells informs neighbour eNBs whether or not EN-DC can be provided using different messages (e.g., which may comprise or be included in the control signaling 16 in Figure 1). Messages can be sent directly between the eNBs. Messages can also be sent via intermediate nodes, such as MMEs. Examples of messages that can be used are X2 Setup Request, X2 Setup Response and eNB Configuration Update, defined in 3GPP TS 36.423 v15.3.0 X2 Application Protocol (X2AP). These messages are shown in Table 1, Table 2, and Table 3 below. All of these messages contain the Served Cell Information information element (IE), which carries information about the cells controlled by the eNB. The information on EN-DC capability can be added to the Served Cell Information IE as shown in Table 4.

An eNB controlling LTE cells in some embodiments alternatively or additionally informs neighbour eNBs about the NR cells that are neighbours to the LTE cells that the eNB controls. Different messages can be used. Messages can be sent directly between the eNBs. Messages can also be sent via intermediate nodes, such as MMEs. Examples of messages that can be used (e.g., as control signaling 16 in Figure 1) are X2 Setup Request, X2 Setup Response and eNB Configuration Update, defined in 3GPP TS 36.423 v15.3.0 X2 Application Protocol (X2AP). These messages are shown in Table 1, Table 2, and Table 3.

An NR Neighbour Information IE, holding information on the neighbour NR cells, can be added to these messages. Examples are shown in Table 1, Table 2, and Table 3. As an example, the NR Neighbour Information IE, defined in 3GPP TS 36.423 v15.3.0 X2 Application Protocol (X2AP) can be reused to carry this information. Information on the bandwidth and sub-carrier spacing of the neighbour NR cell can for example be transferred by adding that information to the NR Neighbour Information. The NR Neighbour Information IE, with exemplifying additions is shown in Table 5. The bandwidth and sub-carrier spacing could be included in the NR Neighbour Information IE by including the NR Transmission Bandwidth IE, shown in Table 6. Information on if the neighbour NR cell can provide EN-DC together with the LTE cell, whose neighbour it is, can for example be included in the NR Neighbour Information IE, see Table 5.

### X2 SETUP REQUEST

**Table 1. X2 Setup Request. New added NR Neighbour Information IE shown in italics.**

| **IE/Group Name** | | **Presence** | **Range** | **IE type and reference** | **Semantics description** |
|---|---|---|---|---|---|
| Message Type | | M | | 9.2.13 | |
| Global eNB ID | | M | | 9.2.22 | |
| **Served Cells** | | | *1 .. <maxCellineNB>* | | Complete list of cells served by the eNB |
| | >Served Cell Information | M | | 9.2.8 | |
| | **>Neighbour Information** | | *0.. <maxnoofNeighbours>* | | |
| | >>ECGI | M | | ECGI 9.2.14 | E-UTRAN Cell Global Identifier of the neighbour cell |
| | >>PCI | M | | INTEGER (0..503, ...) | Physical Cell Identifier of the neighbour cell |
| | >>EARFCN | M | | 9.2.26 | DL EARFCN for FDD or EARFCN for TDD |
| | >>TAC | O | | OCTET STRING (2) | Tracking Area Code |
| | >>EARFCN Extension | O | | 9.2.65 | DL EARFCN for FDD or EARFCN for TDD. If this IE is present, the value signalled in the *EARFCN* IE is ignored. |
| | *>NR Neighbour Information* | | | | |
| **GU Group Id List** | | | *0 .. <maxfPools>* | | List of all the pools to which the eNB belongs |
| | >GU Group Id | M | | 9.2.20 | |
| LHN ID | | O | | 9.2.83 | |

### X2 SETUP RESPONSE

**Table 2. X2 Setup Response. New added NR Neighbour Information IE shown in italics.**

| **IE/Group Name** | | **Presence** | **Range** | **IE type and reference** | **Semantics description** |
|---|---|---|---|---|---|
| Message Type | | M | | 9.2.13 | |
| Global eNB ID | | M | | 9.2.22 | |
| **Served Cells** | | | *1 .. <maxCellineNB>* | | Complete list of cells served by the eNB |
| | >Served Cell Information | M | | 9.2.8 | |
| | **>Neighbour Information** | | *0.. <maxnoofNeighbours>* | | |
| | >>ECGI | M | | ECGI 9.2.14 | E-UTRAN Cell Global Identifier of the neighbour cell |
| | >>PCI | M | | INTEGER (0..503, ...) | Physical Cell Identifier of the neighbour cell |
| | >>EARFCN | M | | 9.2.26 | DL EARFCN for FDD or EARFCN for TDD |
| | >>TAC | O | | OCTET STRING (2) | Tracking Area Code |
| | >>EARFCN Extension | O | | 9.2.65 | DL EARFCN for FDD or EARFCN for TDD. If this IE is present, the value signalled in the *EARFCN* IE is ignored. |
| | *>NR Neighbour Information* | | | | |
| **GU Group Id List** | | | *0 .. <maxPools>* | | List of all the pools to which the eNB belongs |
| | >GU Group Id | M | | 9.2.20 | |
| Criticality Diagnostics | | O | | 9.2.7 | |
| LHN ID | | O | | 9.2.83 | |

### ENB CONFIGURATION UPDATE

**Table 3. X2 eNB Configuration Update. New added NR Neighbour Information IE shown in italics.**

| **IE/Group Name** | | **Presenc e** | **Range** | **IE type and referen ce** | **Semantics description** |
|---|---|---|---|---|---|
| Message Type | | M | | 9.2.13 | |
| **Served Cells To Add** | | | *0.. <maxCellineNB>* | | Complete list of added cells served by the eNB |
| | >Served Cell Information | M | | 9.2.8 | |
| | **>Neighbour Information** | | *0.. <maxnoofNeighb ours>* | | |
| | >>ECGI | M | | ECGI 9.2.14 | E-UTRAN Cell Global Identifier of the neighbour cell |
| | >>PCI | M | | INTEGE R (0..503, ...) | Physical Cell Identifier of the neighbour cell |
| | >>EARFCN | M | | 9.2.26 | DL EARFCN for FDD or EARFCN for TDD |
| | >>TAC | O | | OCTET STRING (2) | Tracking Area Code |
| | >>EARFCN Extension | O | | 9.2.65 | DL EARFCN for FDD or EARFCN for TDD. If this IE is present, the value signalled in the *EARFCN* IE is ignored. |
| | *>NR Neighbour Information* | | | | |
| **Served Cells To Modify** | | | *0* .. *<maxCellineNB>* | | Complete list of modified cells served by the eNB |
| | >Old ECGI | M | | ECGI 9.2.14 | Old E-UTRAN Cell Global Identifier |
| | >Served Cell Information | M | | 9.2.8 | |
| | **>Neighbour Information** | | *0 .. <maxnoofNeighb ours>* | | |
| | >>ECGI | M | | ECGI 9.2.14 | E-UTRAN Cell Global Identifier of the neighbour cell |
| | >>PCI | M | | INTEGE R (0..503, ...) | Physical Cell Identifier of the neighbour cell |
| | >>EARFCN | M | | 9.2.26 | DL EARFCN for FDD or EARFCN for TDD |
| | >>TAC | O | | OCTET STRING (2) | Tracking Area Code |
| | >>EARFCN Extension | O | | 9.2.65 | DL EARFCN for FDD or EARFCN for TDD. If this IE is present, the value signalled in the *EARFCN* IE is ignored. |
| | *>NR Neighbour Information* | | | | |
| | >Deactivation Indication | O | | ENUME RATED( deactiva ted, ...) | Indicates that the concerned cell is switched off for energy saving reasons |
| **Served Cells To Delete** | | | *0.. <maxCellineNB>* | | Complete list of deleted cells served by the eNB |
| | >Old ECGI | M | | ECGI 9.2.14 | Old E-UTRAN Cell Global Identifier of the cell to be deleted |
| **GU Group Id To Add List** | | | *0 .. <maxPools>* | | |
| | >GU Group Id | M | | 9.2.20 | |
| **GU Group Id To Delete List** | | | *0 .. <maxPools>* | | |
| | >GU Group Id | M | | 9.2.20 | |
| Coverage Modification List | | | *0 .. <maxCellineNB>* | | List of cells with modified coverage |
| | >ECGI | M | | ECGI 9.2.14 | E-UTRAN Cell Global Identifier of the cell to be modified |
| | >Cell Coverage State | M | | INTEGE R (0..15, ...) | Value '0' indicates that the cell is inactive. Other values Indicates that the cell is active and also indicates the coverage configuration of the concerned cell |
| | >Cell Deployment Status Indicator | O | | ENUME RATED( pre-change-notification, ...) | Indicates the Cell Coverage State is planned to be used at the next reconfiguration |
| | >Cell Replacing Info | C-ifCellDe ploymen tStatusl ndicator Present | | | |
| | >>Replacing Cells | | *0* .. *<maxCellineNB>* | | |
| | >>>ECGI | | | ECGI 9.2.14 | E-UTRAN Cell Global Identifier of a cell that may replace all or part of the coverage of the cell to be modified |

### Served Cell Information

**Table 4. Served Cell Information IE. Text in italics in last row shows possible addition of EN-DC capability information.**

| **IE/Group Name** | | | | | **Presence** | **Range** | **IE type and reference** | **Semantics description** |
|---|---|---|---|---|---|---|---|---|
| PCI | | | | | M | | INTEGER (0..503, ...) | Physical Cell ID |
| Cell ID | | | | | M | | ECGI 9.2.14 | |
| TAC | | | | | M | | OCTET STRING(2) | Tracking Area Code |
| **Broadcast PLMNs** | | | | | | *1..<maxnoofBPLMN s*> | | Broadcast PLMNs |
| >PLMN Identity | | | | | M | | 9.2.4 | |
| CHOICE EUTRA-Mode-Info | | | | | M | | | |
| | >FDD | | | | | | | |
| | | **>>FDD Info** | | | | 1 | | |
| | | | >>>UL EARFCN | | M | | EARFCN 9.2.26 | Corresponds to N_{UL} in TS 36.104 [16] for E-UTRA operating bands for which it is defined; ignored for E-UTRA operating bands for which N_{UL} is not defined |
| | | | >>>DL EARFCN | | M | | EARFCN 9.2.26 | Corresponds to N_{DL} in TS 36.104 [16] |
| | | | >>>UL Transmission Bandwidth | | M | | Transmission Bandwidth 9.2.27 | Same as DL Transmission Bandwidth in this release; ignored in case UL EARFCN value is ignored |
| | | | >>>DL Transmission Bandwidth | | M | | Transmission Bandwidth 9.2.27 | |
| | | | >>>UL EARFCN Extension | | O | | EARFCN Extension 9.2.65 | If this IE is present, the value signalled in the UL EARFCN IE is ignored. |
| | | | >>>DL EARFCN Extension | | O | | EARFCN Extension 9.2.65 | If this IE is present, the value signalled in the DL EARFCN IE is ignored. |
| | | | >>>Offset of NB-IoT Channel Number to DL EARFCN | | O | | Offset of NB-IoT Channel Number to EARFCN 9.2.94 | Corresponds to M_{DL} in TS 36.104 [16] |
| | | | >>>Offset of NB-IoT Channel Number to UL EARFCN | | O | | Offset of NB-IoT Channel Number to EARFCN 9.2.94 | Corresponds to M_{UL} in TS 36.104 [16] |
| | | | >>>NRS-NSSS-PowerOffset | | O | | ENUMERATED (-3, 0, 3, ...) | NRS to NSSS power ratio, as defined in TS6.213 [11]. |
| | | | >>>NSSS-NumOccasionDifferentPrecoder | | O | | ENUMERAT ED (2, 4, 8, ...) | The number of consecutive NSSS occasions that use different precoders for NSSS transmission, as defined in TS6.213 [11]. |
| | >TDD | | | | | | | |
| | | **>>TDD Info** | | | | 1 | | |
| | | | >>>EARFCN | | M | | 9.2.26 | Corresponds to N_{DL}/N_{UL} in TS 36.104 [16] |
| | | | >>>Transmission Bandwidth | | M | | Transmission Bandwidth 9.2.27 | |
| | | | >>>Subframe Assignment | | M | | ENUMERATED(sa0, sa1, sa2, sa3, sa4, sa5, sa6,...) | Uplink-downlink subframe configuration information defined in TS 36.211 [10]. |
| | | | | | | | | In NB-IOT, sa0 and sa6 are not applicable. |
| | | | **>>>Special Subframe Info** | | | 1 | | Special subframe configuration information defined in TS 36.211 [10] |
| | | | | >>>>Special Subframe Patterns | M | | ENUMERATED(ssp0, ssp1, ssp2, ssp3, ssp4, ssp5, ssp6, ssp7, ssp8, ...) | |
| | | | | >>>>Cyclic Prefix DL | M | | ENUMERATED(Normal, Extended,...) | |
| | | | | >>>>Cyclic Prefix UL | M | | ENUMERATED(Normal, Extended,...) | |
| | | | **>>>Additional Special Subframe Info** | | O | | | Special subframe configuration information defined in TS 36.211 [10]. |
| | | | | | | | | Only for newly defined configuration of special subframe from Release 11. |
| | | | | >>>>Additional Special Subframe Patterns | M | | ENUMERATED(ssp0, ssp1, ssp2, ssp3, ssp4, ssp5, ssp6, ssp7, ssp8, ssp9, ...) | |
| | | | | >>>>Cyclic Prefix DL | M | | ENUMERATED(Normal, Extended,...) | |
| | | | | >>>>Cyclic Prefix UL | M | | ENUMERATED(Normal, Extended,...) | |
| | | | >>>EARFCN Extension | | O | | 9.2.65 | If this IE is present, the value signalled in the *EARFCN* IE is ignored. |
| | | | **>>>Additional Special Subframe Extension Info** | | O | | | Special subframe configuration information defined in TS 36.211 [10]. |
| | | | | | | | | Only for newly defined configuration of special subframe from Release 14. |
| | | | >>>>Additional Special Subframe Patterns Extension | | M | | ENUMERATED(ssp10, ... ) | |
| | | | >>>>Cyclic Prefix DL | | M | | ENUMERATED(Normal, Extended,...) | |
| | | | >>>>Cyclic Prefix UL | | M | | ENUMERATED(Normal, Extended,...) | |
| Number of Antenna Ports | | | | | O | | 9.2.43 | |
| PRACH Configuration | | | | | O | | PRACH Configuration 9.2.50 | |
| **MBSFN Subframe Info** | | | | | | *0.. <maxnoofMBSFN >* | | MBSFN subframe defined in TS 36.331 [9] |
| | >Radioframe Allocation Period | | | | M | | ENUMERAT ED(n1, n2, n4, n8, n16, n32, ...) | |
| | >Radioframe Allocation Offset | | | | M | | INTEGER (0..7, ...) | |
| | >Subframe Allocation | | | | M | | 9.2.51 | |
| CSG ID | | | | | O | | 9.2.53 | |
| **MBMS Service Area Identity List** | | | | | | *0..<maxnoofMBMS ServiceAreaIdentities >* | | Supported MBMS Service Area Identities in the cell |
| | >MBMS Service Area Identity | | | | | | OCTET STRING(2) | MBMS Service Area Identities as defined in TS 23.003 [29] |
| MultibandlnfoList | | | | | O | | 9.2.60 | |
| FreqBandlndicatorPriority | | | | | O | | ENUMERATED (not-broadcasted, broadcasted, ...) | This IE indicates that the eNodeB supports *FreqBandIndic ationPriority,* and whether *FreqBandindic atorPriority* is broadcasted in SIB 1 (see TS 36.331 [9]) |
| BandwidthReducedSI | | | | | O | | ENUMERATED (scheduled, . ..) | This IE indicates that the SystemInformat ionBlockType1-BR is scheduled in the cell (see TS 36.331 [9]) |
| Protected E-UTRA Resource Indication | | | | | O | | 9.2.125 | This IE indicates which E-UTRA control/referenc e signal resources are protected and are not subject to E-UTRA - NR Cell Resource Coordination. |
| *EN-DC Capability Indication* | | | | | | | *ENUMERATED (not-capable, capable)* | |

### NR Neighbour Information

**Table 5. NR Neighbour Information IE. Text in italics shows possible addition of neighbour cell bandwidth information and EN-DC capability.**

| **IE/Group Name** | **Presenc e** | **Range** | **IE type and reference** | **Semantics description** |
|---|---|---|---|---|
| **NR Neighbour Information** | | *1 .. <maxnoofNR Neighbours>* | | |
| >NR Neighbour Information | | | | |
| >>NRPCI | M | | INTEGER (0..1007) | NR Physical Cell ID |
| >>NR-CGI | M | | 9.2.111 | |
| >>CHOICE NR-Neighbour-Mode-Info | M | | | |
| >>>FDD | | | | |
| **>>>>FDD Info** | | *1* | | |
| >>>>>UL ARFCNFreqInfo | M | | NR ARFCN Frequency Info 9.2.106 | |
| >>>>DL ARFCNFreqInfo | M | | NR ARFCN Frequency Info 9.2.106 | |
| *>>>>>UL Transmission Bandwidth* | | | *NR Transmission Bandwidth 9.2.114* | |
| *>>>>>DL Transmission Bandwidth* | | | *NR Transmission Bandwidth 9.2.114* | |
| >>>TDD | | | | |
| **>>>>TDD Info** | | *1* | | |
| >>>>>ARFCNN RFreqInfo | M | | NR ARFCN Frequency Info 9.2.106 | |
| *>>>>>Transmiss ion Bandwidth* | | | *NR Transmission Bandwidth 9.2.114* | |
| >>5GS-TAC | O | | OCTET STRING (3) | Broadcast 5GS Tracking Area Code |
| >>Configured TAC | O | | OCTET STRING (2) | This is the TAC configured in the en-gNB, different from the 5GS TAC broadcast in the NR cell and enables application of Roaming and Access Restrictions for EN-DC as specified in TS 37.340 [32]. |
| >>Measurement Timing Configuration | M | | OCTET STRING | Contains the MeasurementTimingC onfiguration inter-node message for the neighbour cell, as defined in TS 38.331 [31]. |
| *EN-DC Capability Indication* | | | *ENUMER ATED (not-capable, capable)* | |

### NR Transmission Bandwidth

**Table 6. NR Transmission Bandwidth IE**

| **IE/Group Name** | **Presence** | **Range** | **IE Type and Reference** | **Semantics Description** |
|---|---|---|---|---|
| NR SCS | M | | ENUMERATED (scs15, scs30, scs60, scs120, ...) | The values scs15, scs30, scs60 and scs120 corresponds to the sub carrier spacing in TS 38.104 [37]. |
| NR NRB | M | | ENUMERATED (nrb11, nrb18, nrb24, nrb25, nrb31, nrb32, nrb38, nrb51, nrb52, nrb65, nrb66, nrb78, nrb79, nrb93, nrb106, nrb107, nrb121, nrb132, nrb133, nrb135, nrb160, nrb162, nrb189, nrb216, nrb217, nrb245, nrb264, nrb270, nrb273, ...) | This IE is used to indicate the UL or DL transmission bandwidth expressed in units of resource blocks "N_{RB}" (TS 38.104 [37]). The values nrb11, nrb18, etc. correspond to the number of resource blocks "N_{RB}" 11, 18, etc. |

Although described above in a context of EN-DC in some embodiments, other embodiments herein apply to DC with WiFi or other radio technologies.

In some embodiments, DC may be defined as connectivity between nodes, but it does not mean all cells in those two nodes work well together. There can be reasons to exclude some of the cells in a node from being used in DC. So in some cases the operator may configure EN-DC support per cell in each node supporting EN-DC. In some embodiments, then, a cell that support EN-DC may be a cell that is served by a node capable of performing EN-DC with any neighbour G-UTRA node, and configured to allow UEs using this cell as PCell to setup ENDC.

Note that operators will start having only one LTE band for EN-DC while having nodes with cells on several bands. So, nodes signaling to each other that they are EN-DC capable without specifying the bands may be performed if:
1. The EN-DC ready LTE bands are hardcoded in another way in the nodes, to provide EN-DC aware traffic steering, or
2. There will be no LTE carriers that are not EN-DC ready.

The term 'EN-DC ready' for an LTE carrier means here that the operator can (and wants to) use for EN-DC.

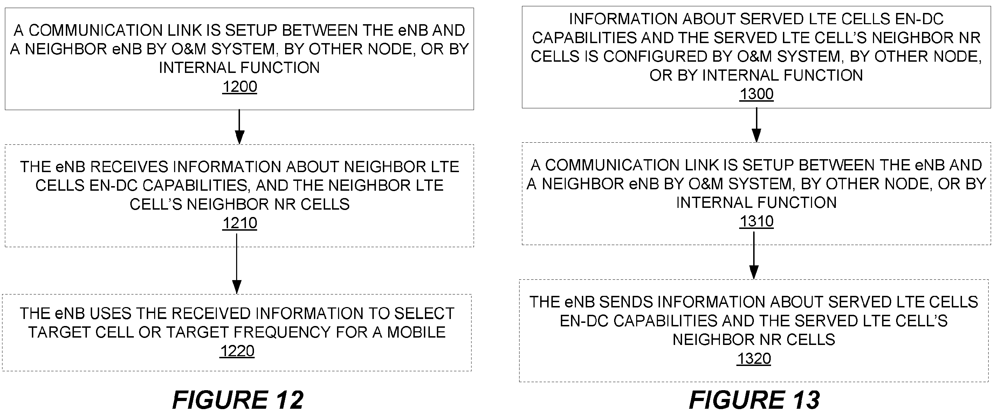

Figure 12 shows a flow chart illustrating some embodiments in an eNB serving a mobile. In particular Figure 12 shows that, in Step 1200, a communication link is setup between the eNB and a neighbour eNB by O&M system, by other node, or by internal function. In Step 1210, the eNB receives information about neighbour LTE cells EN-DC capabilities, and the neighbour LTE cell's neighbour NR cells. In Step 1220, the eNB uses the received information to select target cell or target frequency for a mobile.

Figure 13 shows a flow chart illustrating some embodiments in an eNB neighbour to the eNB serving the mobile. In particular Figure 13 shows that, in step 1300, information about served LTE cells EN-DC capabilities and the served LTE cell's neighbour NR cells is configured by O&M system, by other node, or by internal function. In Step 1310, a communication link is setup between the eNB and a neighbour eNB by O&M system, by other node, or by internal function. In step 1320, the eNB sends information about served LTE cells EN-DC capabilities and the served LTE cell's neighbour NR cells.

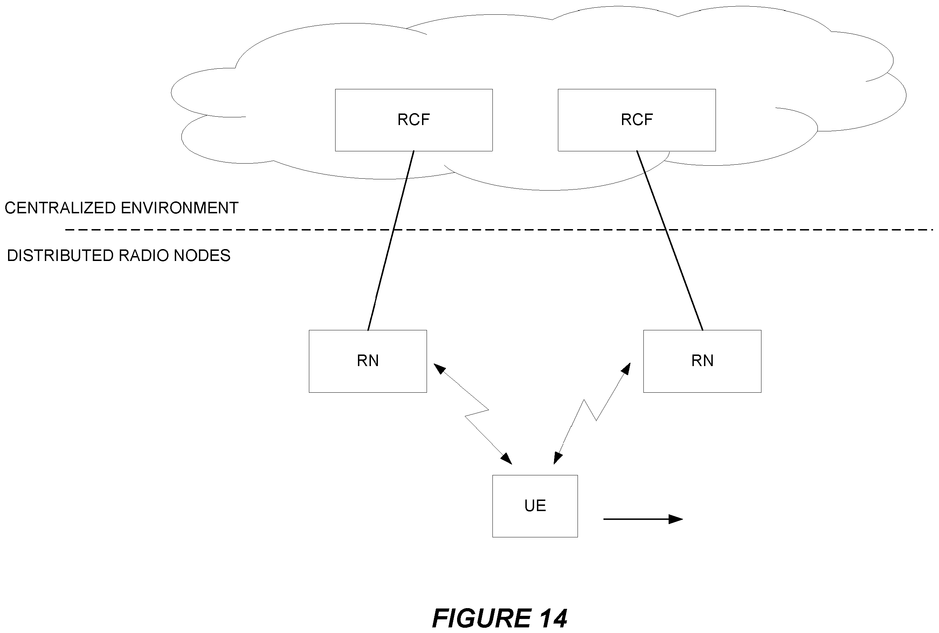

Some embodiments are implemented in an E-UTRAN or NG-RAN typically located in the radio control function (RCF) in an eNB, gNB or ng-eNB. The RCF may be located physically in a distributed entity close to the radio nodes (RN) or in a data center in a central location or on suitable hardware somewhere in between. Figure 14 in this regard shows RCFs in a centralized computing environment.

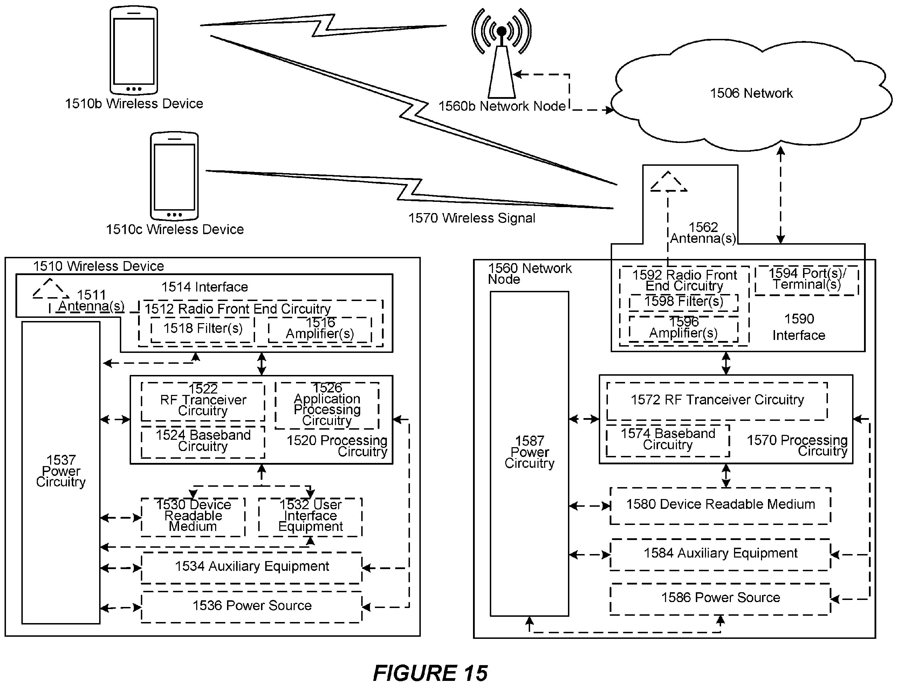

Although the subject matter described herein may be implemented in any appropriate type of system using any suitable components, the embodiments disclosed herein are described in relation to a wireless network, such as the example wireless network illustrated in Figure 15. For simplicity, the wireless network of Figure 15 only depicts network 1506, network nodes 1560 and 1560b, and WDs 1510, 1510b, and 1510c. In practice, a wireless network may further include any additional elements suitable to support communication between wireless devices or between a wireless device and another communication device, such as a landline telephone, a service provider, or any other network node or end device. Of the illustrated components, network node 1560 and wireless device (WD) 1510 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-IoT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1506 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1560 and WD 1510 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 15, network node 1560 includes processing circuitry 1570, device readable medium 1580, interface 1590, auxiliary equipment 1584, power source 1586, power circuitry 1587, and antenna 1562. Although network node 1560 illustrated in the example wireless network of Figure 15 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1560 are depicted as single boxes located within a larger box, or nested within multiple boxes, in practice, a network node may comprise multiple different physical components that make up a single illustrated component (e.g., device readable medium 1580 may comprise multiple separate hard drives as well as multiple RAM modules).

Similarly, network node 1560 may be composed of multiple physically separate components (e.g., a NodeB component and a RNC component, or a BTS component and a BSC component, etc.), which may each have their own respective components. In certain scenarios in which network node 1560 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1560 may be configured to support multiple radio access technologies (RATs). In such embodiments, some components may be duplicated (e.g., separate device readable medium 1580 for the different RATs) and some components may be reused (e.g., the same antenna 1562 may be shared by the RATs). Network node 1560 may also include multiple sets of the various illustrated components for different wireless technologies integrated into network node 1560, such as, for example, GSM, WCDMA, LTE, NR, WiFi, or Bluetooth wireless technologies. These wireless technologies may be integrated into the same or different chip or set of chips and other components within network node 1560.

Processing circuitry 1570 is configured to perform any determining, calculating, or similar operations (e.g., certain obtaining operations) described herein as being provided by a network node. These operations performed by processing circuitry 1570 may include processing information obtained by processing circuitry 1570 by, for example, converting the obtained information into other information, comparing the obtained information or converted information to information stored in the network node, and/or performing one or more operations based on the obtained information or converted information, and as a result of said processing making a determination.

Processing circuitry 1570 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1560 components, such as device readable medium 1580, network node 1560 functionality. For example, processing circuitry 1570 may execute instructions stored in device readable medium 1580 or in memory within processing circuitry 1570. Such functionality may include providing any of the various wireless features, functions, or benefits discussed herein. In some embodiments, processing circuitry 1570 may include a system on a chip (SOC).

In some embodiments, processing circuitry 1570 may include one or more of radio frequency (RF) transceiver circuitry 1572 and baseband processing circuitry 1574. In some embodiments, radio frequency (RF) transceiver circuitry 1572 and baseband processing circuitry 1574 may be on separate chips (or sets of chips), boards, or units, such as radio units and digital units. In alternative embodiments, part or all of RF transceiver circuitry 1572 and baseband processing circuitry 1574 may be on the same chip or set of chips, boards, or units

In certain embodiments, some or all of the functionality described herein as being provided by a network node, base station, eNB or other such network device may be performed by processing circuitry 1570 executing instructions stored on device readable medium 1580 or memory within processing circuitry 1570. In alternative embodiments, some or all of the functionality may be provided by processing circuitry 1570 without executing instructions stored on a separate or discrete device readable medium, such as in a hard-wired manner. In any of those embodiments, whether executing instructions stored on a device readable storage medium or not, processing circuitry 1570 can be configured to perform the described functionality. The benefits provided by such functionality are not limited to processing circuitry 1570 alone or to other components of network node 1560, but are enjoyed by network node 1560 as a whole, and/or by end users and the wireless network generally.

Device readable medium 1580 may comprise any form of volatile or nonvolatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or nonvolatile, non-transitory device readable and/or computer-executable memory devices that store information, data, and/or instructions that may be used by processing circuitry 1570. Device readable medium 1580 may store any suitable instructions, data or information, including a computer program, software, an application including one or more of logic, rules, code, tables, etc. and/or other instructions capable of being executed by processing circuitry 1570 and, utilized by network node 1560. Device readable medium 1580 may be used to store any calculations made by processing circuitry 1570 and/or any data received via interface 1590. In some embodiments, processing circuitry 1570 and device readable medium 1580 may be considered to be integrated.

Interface 1590 is used in the wired or wireless communication of signaling and/or data between network node 1560, network 1506, and/or WDs 1510. As illustrated, interface 1590 comprises port(s)/terminal(s) 1594 to send and receive data, for example to and from network 1506 over a wired connection. Interface 1590 also includes radio front end circuitry 1592 that may be coupled to, or in certain embodiments a part of, antenna 1562. Radio front end circuitry 1592 comprises filters 1598 and amplifiers 1596. Radio front end circuitry 1592 may be connected to antenna 1562 and processing circuitry 1570. Radio front end circuitry may be configured to condition signals communicated between antenna 1562 and processing circuitry 1570. Radio front end circuitry 1592 may receive digital data that is to be sent out to other network nodes or WDs via a wireless connection. Radio front end circuitry 1592 may convert the digital data into a radio signal having the appropriate channel and bandwidth parameters using a combination of filters 1598 and/or amplifiers 1596. The radio signal may then be transmitted via antenna 1562. Similarly, when receiving data, antenna 1562 may collect radio signals which are then converted into digital data by radio front end circuitry 1592. The digital data may be passed to processing circuitry 1570. In other embodiments, the interface may comprise different components and/or different combinations of components.

In certain alternative embodiments, network node 1560 may not include separate radio front end circuitry 1592, instead, processing circuitry 1570 may comprise radio front end circuitry and may be connected to antenna 1562 without separate radio front end circuitry 1592. Similarly, in some embodiments, all or some of RF transceiver circuitry 1572 may be considered a part of interface 1590. In still other embodiments, interface 1590 may include one or more ports or terminals 1594, radio front end circuitry 1592, and RF transceiver circuitry 1572, as part of a radio unit (not shown), and interface 1590 may communicate with baseband processing circuitry 1574, which is part of a digital unit (not shown).

Antenna 1562 may include one or more antennas, or antenna arrays, configured to send and/or receive wireless signals. Antenna 1562 may be coupled to radio front end circuitry 1590 and may be any type of antenna capable of transmitting and receiving data and/or signals wirelessly. In some embodiments, antenna 1562 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1562 may be separate from network node 1560 and may be connectable to network node 1560 through an interface or port.

Antenna 1562, interface 1590, and/or processing circuitry 1570 may be configured to perform any receiving operations and/or certain obtaining operations described herein as being performed by a network node. Any information, data and/or signals may be received from a wireless device, another network node and/or any other network equipment. Similarly, antenna 1562, interface 1590, and/or processing circuitry 1570 may be configured to perform any transmitting operations described herein as being performed by a network node. Any information, data and/or signals may be transmitted to a wireless device, another network node and/or any other network equipment.

Power circuitry 1587 may comprise, or be coupled to, power management circuitry and is configured to supply the components of network node 1560 with power for performing the functionality described herein. Power circuitry 1587 may receive power from power source 1586. Power source 1586 and/or power circuitry 1587 may be configured to provide power to the various components of network node 1560 in a form suitable for the respective components (e.g., at a voltage and current level needed for each respective component). Power source 1586 may either be included in, or external to, power circuitry 1587 and/or network node 1560. For example, network node 1560 may be connectable to an external power source (e.g., an electricity outlet) via an input circuitry or interface such as an electrical cable, whereby the external power source supplies power to power circuitry 1587. As a further example, power source 1586 may comprise a source of power in the form of a battery or battery pack which is connected to, or integrated in, power circuitry 1587. The battery may provide backup power should the external power source fail. Other types of power sources, such as photovoltaic devices, may also be used.

Alternative embodiments of network node 1560 may include additional components beyond those shown in Figure 15 that may be responsible for providing certain aspects of the network node's functionality, including any of the functionality described herein and/or any functionality necessary to support the subject matter described herein. For example, network node 1560 may include user interface equipment to allow input of information into network node 1560 and to allow output of information from network node 1560. This may allow a user to perform diagnostic, maintenance, repair, and other administrative functions for network node 1560.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1510 includes antenna 1511, interface 1514, processing circuitry 1520, device readable medium 1530, user interface equipment 1532, auxiliary equipment 1534, power source 1536 and power circuitry 1537. WD 1510 may include multiple sets of one or more of the illustrated components for different wireless technologies supported by WD 1510, such as, for example, GSM, WCDMA, LTE, NR, WiFi, WiMAX, NB-loT, or Bluetooth wireless technologies, just to mention a few. These wireless technologies may be integrated into the same or different chips or set of chips as other components within WD 1510.

Antenna 1511 may include one or more antennas or antenna arrays, configured to send and/or receive wireless signals, and is connected to interface 1514. In certain alternative embodiments, antenna 1511 may be separate from WD 1510 and be connectable to WD 1510 through an interface or port. Antenna 1511, interface 1514, and/or processing circuitry 1520 may be configured to perform any receiving or transmitting operations described herein as being performed by a WD. Any information, data and/or signals may be received from a network node and/or another WD. In some embodiments, radio front end circuitry and/or antenna 1511 may be considered an interface.

As illustrated, interface 1514 comprises radio front end circuitry 1512 and antenna 1511. Radio front end circuitry 1512 comprise one or more filters 1518 and amplifiers 1516. Radio front end circuitry 1514 is connected to antenna 1511 and processing circuitry 1520, and is configured to condition signals communicated between antenna 1511 and processing circuitry 1520. Radio front end circuitry 1512 may be coupled to or a part of antenna 1511. In some embodiments, WD 1510 may not include separate radio front end circuitry 1512; rather, processing circuitry 1520 may comprise radio front end circuitry and may be connected to antenna 1511. Similarly, in some embodiments, some or all of RF transceiver circuitry 1522 may be considered a part of interface 1514. Radio front end circuitry 1512 may receive digital data that is to be sent out to other network nodes or WDs via a wireless connection. Radio front end circuitry 1512 may convert the digital data into a radio signal having the appropriate channel and bandwidth parameters using a combination of filters 1518 and/or amplifiers 1516. The radio signal may then be transmitted via antenna 1511. Similarly, when receiving data, antenna 1511 may collect radio signals which are then converted into digital data by radio front end circuitry 1512. The digital data may be passed to processing circuitry 1520. In other embodiments, the interface may comprise different components and/or different combinations of components.

Processing circuitry 1520 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1510 components, such as device readable medium 1530, WD 1510 functionality. Such functionality may include providing any of the various wireless features or benefits discussed herein. For example, processing circuitry 1520 may execute instructions stored in device readable medium 1530 or in memory within processing circuitry 1520 to provide the functionality disclosed herein.

As illustrated, processing circuitry 1520 includes one or more of RF transceiver circuitry 1522, baseband processing circuitry 1524, and application processing circuitry 1526. In other embodiments, the processing circuitry may comprise different components and/or different combinations of components. In certain embodiments processing circuitry 1520 of WD 1510 may comprise a SOC. In some embodiments, RF transceiver circuitry 1522, baseband processing circuitry 1524, and application processing circuitry 1526 may be on separate chips or sets of chips. In alternative embodiments, part or all of baseband processing circuitry 1524 and application processing circuitry 1526 may be combined into one chip or set of chips, and RF transceiver circuitry 1522 may be on a separate chip or set of chips. In still alternative embodiments, part or all of RF transceiver circuitry 1522 and baseband processing circuitry 1524 may be on the same chip or set of chips, and application processing circuitry 1526 may be on a separate chip or set of chips. In yet other alternative embodiments, part or all of RF transceiver circuitry 1522, baseband processing circuitry 1524, and application processing circuitry 1526 may be combined in the same chip or set of chips. In some embodiments, RF transceiver circuitry 1522 may be a part of interface 1514. RF transceiver circuitry 1522 may condition RF signals for processing circuitry 1520.

In certain embodiments, some or all of the functionality described herein as being performed by a WD may be provided by processing circuitry 1520 executing instructions stored on device readable medium 1530, which in certain embodiments may be a computer-readable storage medium. In alternative embodiments, some or all of the functionality may be provided by processing circuitry 1520 without executing instructions stored on a separate or discrete device readable storage medium, such as in a hard-wired manner. In any of those particular embodiments, whether executing instructions stored on a device readable storage medium or not, processing circuitry 1520 can be configured to perform the described functionality. The benefits provided by such functionality are not limited to processing circuitry 1520 alone or to other components of WD 1510, but are enjoyed by WD 1510 as a whole, and/or by end users and the wireless network generally.

Processing circuitry 1520 may be configured to perform any determining, calculating, or similar operations (e.g., certain obtaining operations) described herein as being performed by a WD. These operations, as performed by processing circuitry 1520, may include processing information obtained by processing circuitry 1520 by, for example, converting the obtained information into other information, comparing the obtained information or converted information to information stored by WD 1510, and/or performing one or more operations based on the obtained information or converted information, and as a result of said processing making a determination.

Device readable medium 1530 may be operable to store a computer program, software, an application including one or more of logic, rules, code, tables, etc. and/or other instructions capable of being executed by processing circuitry 1520. Device readable medium 1530 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1520. In some embodiments, processing circuitry 1520 and device readable medium 1530 may be considered to be integrated.

User interface equipment 1532 may provide components that allow for a human user to interact with WD 1510. Such interaction may be of many forms, such as visual, audial, tactile, etc. User interface equipment 1532 may be operable to produce output to the user and to allow the user to provide input to WD 1510. The type of interaction may vary depending on the type of user interface equipment 1532 installed in WD 1510. For example, if WD 1510 is a smart phone, the interaction may be via a touch screen; if WD 1510 is a smart meter, the interaction may be through a screen that provides usage (e.g., the number of gallons used) or a speaker that provides an audible alert (e.g., if smoke is detected). User interface equipment 1532 may include input interfaces, devices and circuits, and output interfaces, devices and circuits. User interface equipment 1532 is configured to allow input of information into WD 1510, and is connected to processing circuitry 1520 to allow processing circuitry 1520 to process the input information. User interface equipment 1532 may include, for example, a microphone, a proximity or other sensor, keys/buttons, a touch display, one or more cameras, a USB port, or other input circuitry. User interface equipment 1532 is also configured to allow output of information from WD 1510, and to allow processing circuitry 1520 to output information from WD 1510. User interface equipment 1532 may include, for example, a speaker, a display, vibrating circuitry, a USB port, a headphone interface, or other output circuitry. Using one or more input and output interfaces, devices, and circuits, of user interface equipment 1532, WD 1510 may communicate with end users and/or the wireless network, and allow them to benefit from the functionality described herein.

Auxiliary equipment 1534 is operable to provide more specific functionality which may not be generally performed by WDs. This may comprise specialized sensors for doing measurements for various purposes, interfaces for additional types of communication such as wired communications etc. The inclusion and type of components of auxiliary equipment 1534 may vary depending on the embodiment and/or scenario.

Power source 1536 may, in some embodiments, be in the form of a battery or battery pack. Other types of power sources, such as an external power source (e.g., an electricity outlet), photovoltaic devices or power cells, may also be used. WD 1510 may further comprise power circuitry 1537 for delivering power from power source 1536 to the various parts of WD 1510 which need power from power source 1536 to carry out any functionality described or indicated herein. Power circuitry 1537 may in certain embodiments comprise power management circuitry. Power circuitry 1537 may additionally or alternatively be operable to receive power from an external power source; in which case WD 1510 may be connectable to the external power source (such as an electricity outlet) via input circuitry or an interface such as an electrical power cable. Power circuitry 1537 may also in certain embodiments be operable to deliver power from an external power source to power source 1536. This may be, for example, for the charging of power source 1536. Power circuitry 1537 may perform any formatting, converting, or other modification to the power from power source 1536 to make the power suitable for the respective components of WD 1510 to which power is supplied.

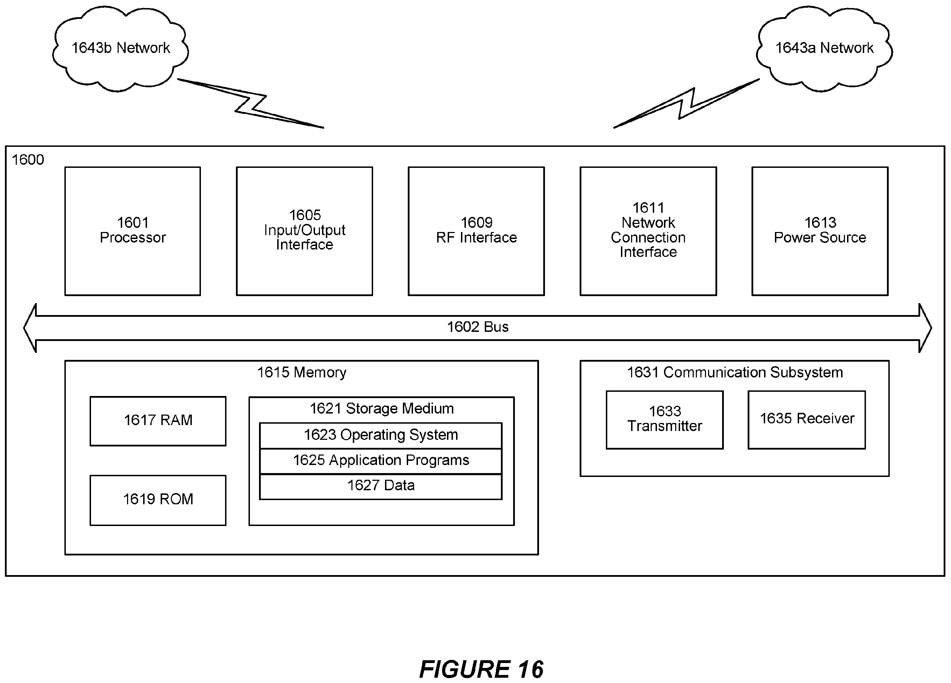

Figure 16 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 16200 may be any UE identified by the 3^{rd} Generation Partnership Project (3GPP), including a NB-loT UE, a machine type communication (MTC) UE, and/or an enhanced MTC (eMTC) UE. UE 1600, as illustrated in Figure 16, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 16 is a UE, the components discussed herein are equally applicable to a WD, and vice-versa.

In Figure 16, UE 1600 includes processing circuitry 1601 that is operatively coupled to input/output interface 1605, radio frequency (RF) interface 1609, network connection interface 1611, memory 1615 including random access memory (RAM) 1617, read-only memory (ROM) 1619, and storage medium 1621 or the like, communication subsystem 1631, power source 1633, and/or any other component, or any combination thereof. Storage medium 1621 includes operating system 1623, application program 1625, and data 1627. In other embodiments, storage medium 1621 may include other similar types of information. Certain UEs may utilize all of the components shown in Figure 16, or only a subset of the components. The level of integration between the components may vary from one UE to another UE. Further, certain UEs may contain multiple instances of a component, such as multiple processors, memories, transceivers, transmitters, receivers, etc.

In Figure 16, processing circuitry 1601 may be configured to process computer instructions and data. Processing circuitry 1601 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1601 may include two central processing units (CPUs). Data may be information in a form suitable for use by a computer.

In the depicted embodiment, input/output interface 1605 may be configured to provide a communication interface to an input device, output device, or input and output device. UE 1600 may be configured to use an output device via input/output interface 1605. An output device may use the same type of interface port as an input device. For example, a USB port may be used to provide input to and output from UE 1600. The output device may be a speaker, a sound card, a video card, a display, a monitor, a printer, an actuator, an emitter, a smartcard, another output device, or any combination thereof. UE 1600 may be configured to use an input device via input/output interface 1605 to allow a user to capture information into UE 1600. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 16, RF interface 1609 may be configured to provide a communication interface to RF components such as a transmitter, a receiver, and an antenna. Network connection interface 1611 may be configured to provide a communication interface to network 1643a. Network 1643a may encompass wired and/or wireless networks such as a local-area network (LAN), a wide-area network (WAN), a computer network, a wireless network, a telecommunications network, another like network or any combination thereof. For example, network 1643a may comprise a Wi-Fi network. Network connection interface 1611 may be configured to include a receiver and a transmitter interface used to communicate with one or more other devices over a communication network according to one or more communication protocols, such as Ethernet, TCP/IP, SONET, ATM, or the like. Network connection interface 1611 may implement receiver and transmitter functionality appropriate to the communication network links (e.g., optical, electrical, and the like). The transmitter and receiver functions may share circuit components, software or firmware, or alternatively may be implemented separately.

RAM 1617 may be configured to interface via bus 1602 to processing circuitry 1601 to provide storage or caching of data or computer instructions during the execution of software programs such as the operating system, application programs, and device drivers. ROM 1619 may be configured to provide computer instructions or data to processing circuitry 1601. For example, ROM 1619 may be configured to store invariant low-level system code or data for basic system functions such as basic input and output (I/O), startup, or reception of keystrokes from a keyboard that are stored in a non-volatile memory. Storage medium 1621 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1621 may be configured to include operating system 1623, application program 1625 such as a web browser application, a widget or gadget engine or another application, and data file 1627. Storage medium 1621 may store, for use by UE 1600, any of a variety of various operating systems or combinations of operating systems.

Storage medium 1621 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1621 may allow UE 1600 to access computer-executable instructions, application programs or the like, stored on transitory or non-transitory memory media, to off-load data, or to upload data. An article of manufacture, such as one utilizing a communication system may be tangibly embodied in storage medium 1621, which may comprise a device readable medium.

In Figure 16, processing circuitry 1601 may be configured to communicate with network 1643b using communication subsystem 1631. Network 1643a and network 1643b may be the same network or networks or different network or networks. Communication subsystem 1631 may be configured to include one or more transceivers used to communicate with network 1643b. For example, communication subsystem 1631 may be configured to include one or more transceivers used to communicate with one or more remote transceivers of another device capable of wireless communication such as another WD, UE, or base station of a radio access network (RAN) according to one or more communication protocols, such as IEEE 802.16, CDMA, WCDMA, GSM, LTE, UTRAN, WiMax, or the like. Each transceiver may include transmitter 1633 and/or receiver 1635 to implement transmitter or receiver functionality, respectively, appropriate to the RAN links (e.g., frequency allocations and the like). Further, transmitter 1633 and receiver 1635 of each transceiver may share circuit components, software or firmware, or alternatively may be implemented separately.

In the illustrated embodiment, the communication functions of communication subsystem 1631 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1631 may include cellular communication, Wi-Fi communication, Bluetooth communication, and GPS communication. Network 1643b may encompass wired and/or wireless networks such as a local-area network (LAN), a wide-area network (WAN), a computer network, a wireless network, a telecommunications network, another like network or any combination thereof. For example, network 1643b may be a cellular network, a Wi-Fi network, and/or a near-field network. Power source 1613 may be configured to provide alternating current (AC) or direct current (DC) power to components of UE 1600.

The features, benefits and/or functions described herein may be implemented in one of the components of UE 1600 or partitioned across multiple components of UE 1600. Further, the features, benefits, and/or functions described herein may be implemented in any combination of hardware, software or firmware. In one example, communication subsystem 1631 may be configured to include any of the components described herein. Further, processing circuitry 1601 may be configured to communicate with any of such components over bus 1602. In another example, any of such components may be represented by program instructions stored in memory that when executed by processing circuitry 1601 perform the corresponding functions described herein. In another example, the functionality of any of such components may be partitioned between processing circuitry 1601 and communication subsystem 1631. In another example, the non-computationally intensive functions of any of such components may be implemented in software or firmware and the computationally intensive functions may be implemented in hardware.

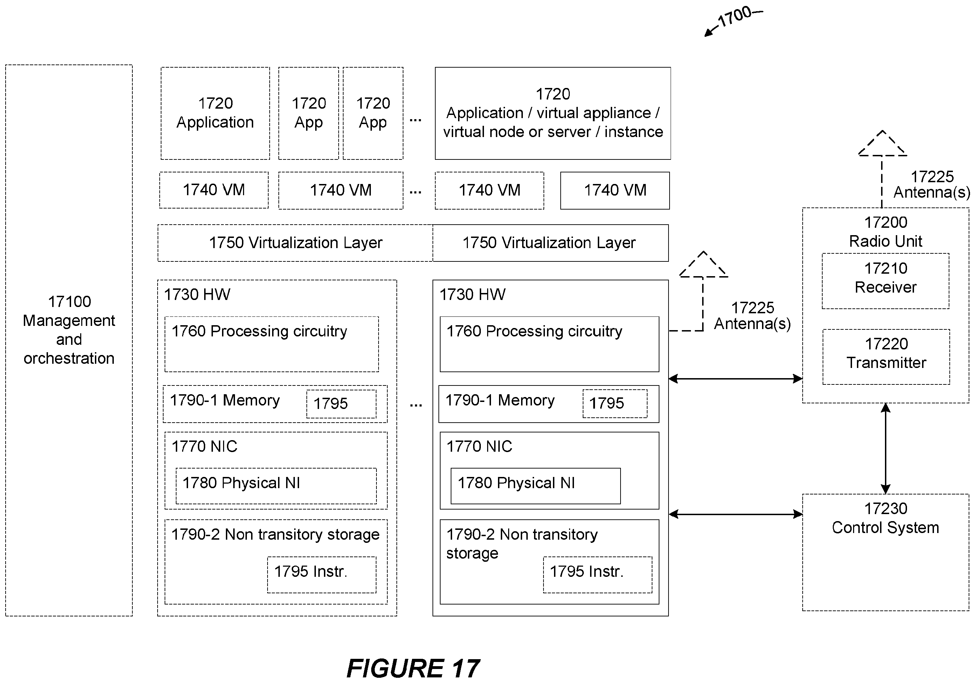

Figure 17 is a schematic block diagram illustrating a virtualization environment 1700 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1700 hosted by one or more of hardware nodes 1730. Further, in embodiments in which the virtual node is not a radio access node or does not require radio connectivity (e.g., a core network node), then the network node may be entirely virtualized.

The functions may be implemented by one or more applications 1720 (which may alternatively be called software instances, virtual appliances, network functions, virtual nodes, virtual network functions, etc.) operative to implement some of the features, functions, and/or benefits of some of the embodiments disclosed herein. Applications 1720 are run in virtualization environment 1700 which provides hardware 1730 comprising processing circuitry 1760 and memory 1790. Memory 1790 contains instructions 1795 executable by processing circuitry 1760 whereby application 1720 is operative to provide one or more of the features, benefits, and/or functions disclosed herein.

Virtualization environment 1700, comprises general-purpose or special-purpose network hardware devices 1730 comprising a set of one or more processors or processing circuitry 1760, which may be commercial off-the-shelf (COTS) processors, dedicated Application Specific Integrated Circuits (ASICs), or any other type of processing circuitry including digital or analog hardware components or special purpose processors. Each hardware device may comprise memory 1790-1 which may be non-persistent memory for temporarily storing instructions 1795 or software executed by processing circuitry 1760. Each hardware device may comprise one or more network interface controllers (NICs) 1770, also known as network interface cards, which include physical network interface 1780. Each hardware device may also include non-transitory, persistent, machine-readable storage media 1790-2 having stored therein software 1795 and/or instructions executable by processing circuitry 1760. Software 1795 may include any type of software including software for instantiating one or more virtualization layers 1750 (also referred to as hypervisors), software to execute virtual machines 1740 as well as software allowing it to execute functions, features and/or benefits described in relation with some embodiments described herein.

Virtual machines 1740, comprise virtual processing, virtual memory, virtual networking or interface and virtual storage, and may be run by a corresponding virtualization layer 1750 or hypervisor. Different embodiments of the instance of virtual appliance 1720 may be implemented on one or more of virtual machines 1740, and the implementations may be made in different ways.

During operation, processing circuitry 1760 executes software 1795 to instantiate the hypervisor or virtualization layer 1750, which may sometimes be referred to as a virtual machine monitor (VMM). Virtualization layer 1750 may present a virtual operating platform that appears like networking hardware to virtual machine 1740.

As shown in Figure 17, hardware 1730 may be a standalone network node with generic or specific components. Hardware 1730 may comprise antenna 17225 and may implement some functions via virtualization. Alternatively, hardware 1730 may be part of a larger cluster of hardware (e.g. such as in a data center or customer premise equipment (CPE)) where many hardware nodes work together and are managed via management and orchestration (MANO) 17100, which, among others, oversees lifecycle management of applications 1720.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1740 may be a software implementation of a physical machine that runs programs as if they were executing on a physical, non-virtualized machine. Each of virtual machines 1740, and that part of hardware 1730 that executes that virtual machine, be it hardware dedicated to that virtual machine and/or hardware shared by that virtual machine with others of the virtual machines 1740, forms a separate virtual network elements (VNE).

Still in the context of NFV, Virtual Network Function (VNF) is responsible for handling specific network functions that run in one or more virtual machines 1740 on top of hardware networking infrastructure 1730 and corresponds to application 1720 in Figure 17.

In some embodiments, one or more radio units 17200 that each include one or more transmitters 17220 and one or more receivers 17210 may be coupled to one or more antennas 17225. Radio units 17200 may communicate directly with hardware nodes 1730 via one or more appropriate network interfaces and may be used in combination with the virtual components to provide a virtual node with radio capabilities, such as a radio access node or a base station.

In some embodiments, some signaling can be effected with the use of control system 17230 which may alternatively be used for communication between the hardware nodes 1730 and radio units 17200.

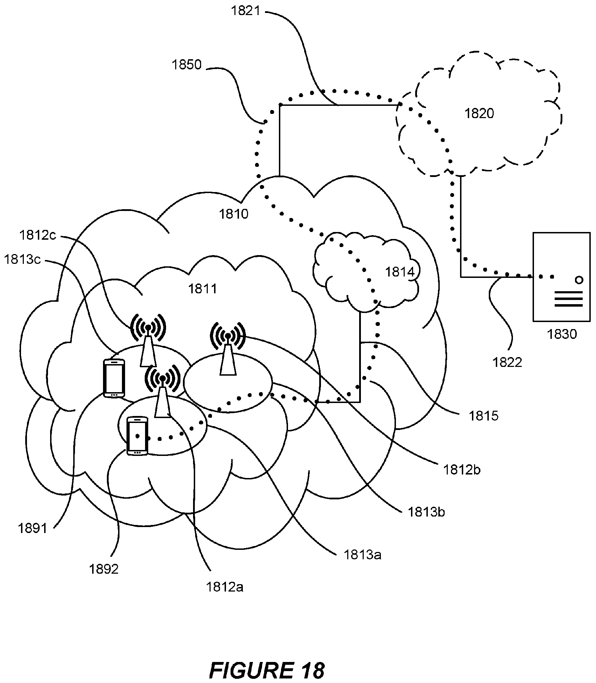

Figure 18 illustrates a telecommunication network connected via an intermediate network to a host computer in accordance with some embodiments. In particular, with reference to FIGURE 18, in accordance with an embodiment, a communication system includes telecommunication network 1810, such as a 3GPP-type cellular network, which comprises access network 1811, such as a radio access network, and core network 1814. Access network 1811 comprises a plurality of base stations 1812a, 1812b, 1812c, such as NBs, eNBs, gNBs or other types of wireless access points, each defining a corresponding coverage area 1813a, 1813b, 1813c. Each base station 1812a, 1812b, 1812c is connectable to core network 1814 over a wired or wireless connection 1815. A first UE 1891 located in coverage area 1813c is configured to wirelessly connect to, or be paged by, the corresponding base station 1812c. A second UE 1892 in coverage area 1813a is wirelessly connectable to the corresponding base station 1812a. While a plurality of UEs 1891, 1892 are illustrated in this example, the disclosed embodiments are equally applicable to a situation where a sole UE is in the coverage area or where a sole UE is connecting to the corresponding base station 1812.

Telecommunication network 1810 is itself connected to host computer 1830, which may be embodied in the hardware and/or software of a standalone server, a cloud-implemented server, a distributed server or as processing resources in a server farm. Host computer 1830 may be under the ownership or control of a service provider, or may be operated by the service provider or on behalf of the service provider. Connections 1821 and 1822 between telecommunication network 1810 and host computer 1830 may extend directly from core network 1814 to host computer 1830 or may go via an optional intermediate network 1820. Intermediate network 1820 may be one of, or a combination of more than one of, a public, private or hosted network; intermediate network 1820, if any, may be a backbone network or the Internet; in particular, intermediate network 1820 may comprise two or more sub-networks (not shown).

The communication system of Figure 18 as a whole enables connectivity between the connected UEs 1891, 1892 and host computer 1830. The connectivity may be described as an over-the-top (OTT) connection 1850. Host computer 1830 and the connected UEs 1891, 1892 are configured to communicate data and/or signaling via OTT connection 1850, using access network 1811, core network 1814, any intermediate network 1820 and possible further infrastructure (not shown) as intermediaries. OTT connection 1850 may be transparent in the sense that the participating communication devices through which OTT connection 1850 passes are unaware of routing of uplink and downlink communications. For example, base station 1812 may not or need not be informed about the past routing of an incoming downlink communication with data originating from host computer 1830 to be forwarded (e.g., handed over) to a connected UE 1891. Similarly, base station 1812 need not be aware of the future routing of an outgoing uplink communication originating from the UE 1891 towards the host computer 1830.

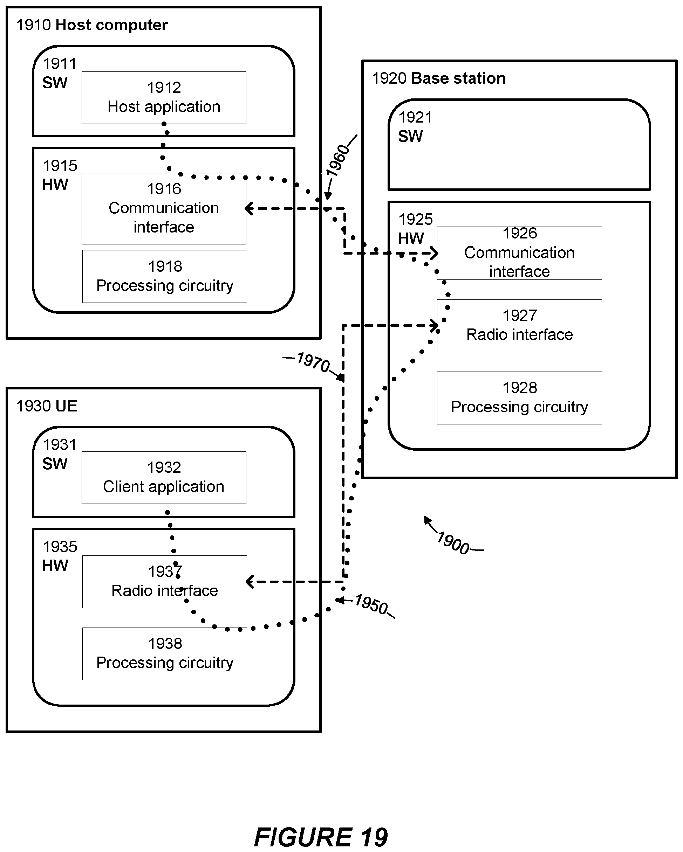

Example implementations, in accordance with an embodiment, of the UE, base station and host computer discussed in the preceding paragraphs will now be described with reference to Figure 19. Figure 19 illustrates host computer communicating via a base station with a user equipment over a partially wireless connection in accordance with some embodiments In communication system 1900, host computer 1910 comprises hardware 1915 including communication interface 1916 configured to set up and maintain a wired or wireless connection with an interface of a different communication device of communication system 1900. Host computer 1910 further comprises processing circuitry 1918, which may have storage and/or processing capabilities. In particular, processing circuitry 1918 may comprise one or more programmable processors, application-specific integrated circuits, field programmable gate arrays or combinations of these (not shown) adapted to execute instructions. Host computer 1910 further comprises software 1911, which is stored in or accessible by host computer 1910 and executable by processing circuitry 1918. Software 1911 includes host application 1912. Host application 1912 may be operable to provide a service to a remote user, such as UE 1930 connecting via OTT connection 1950 terminating at UE 1930 and host computer 1910. In providing the service to the remote user, host application 1912 may provide user data which is transmitted using OTT connection 1950.

Communication system 1900 further includes base station 1920 provided in a telecommunication system and comprising hardware 1925 enabling it to communicate with host computer 1910 and with UE 1930. Hardware 1925 may include communication interface 1926 for setting up and maintaining a wired or wireless connection with an interface of a different communication device of communication system 1900, as well as radio interface 1927 for setting up and maintaining at least wireless connection 1970 with UE 1930 located in a coverage area (not shown in Figure 19) served by base station 1920. Communication interface 1926 may be configured to facilitate connection 1960 to host computer 1910. Connection 1960 may be direct or it may pass through a core network (not shown in Figure 19) of the telecommunication system and/or through one or more intermediate networks outside the telecommunication system. In the embodiment shown, hardware 1925 of base station 1920 further includes processing circuitry 1928, which may comprise one or more programmable processors, application-specific integrated circuits, field programmable gate arrays or combinations of these (not shown) adapted to execute instructions. Base station 1920 further has software 1921 stored internally or accessible via an external connection.

Communication system 1900 further includes UE 1930 already referred to. Its hardware 1935 may include radio interface 1937 configured to set up and maintain wireless connection 1970 with a base station serving a coverage area in which UE 1930 is currently located. Hardware 1935 of UE 1930 further includes processing circuitry 1938, which may comprise one or more programmable processors, application-specific integrated circuits, field programmable gate arrays or combinations of these (not shown) adapted to execute instructions. UE 1930 further comprises software 1931, which is stored in or accessible by UE 1930 and executable by processing circuitry 1938. Software 1931 includes client application 1932. Client application 1932 may be operable to provide a service to a human or non-human user via UE 1930, with the support of host computer 1910. In host computer 1910, an executing host application 1912 may communicate with the executing client application 1932 via OTT connection 1950 terminating at UE 1930 and host computer 1910. In providing the service to the user, client application 1932 may receive request data from host application 1912 and provide user data in response to the request data. OTT connection 1950 may transfer both the request data and the user data. Client application 1932 may interact with the user to generate the user data that it provides.

It is noted that host computer 1910, base station 1920 and UE 1930 illustrated in Figure 19 may be similar or identical to host computer 1830, one of base stations 1812a, 1812b, 1812c and one of UEs 1891, 1892 of Figure 18, respectively. This is to say, the inner workings of these entities may be as shown in Figure 19 and independently, the surrounding network topology may be that of Figure 18.

In Figure 19, OTT connection 1950 has been drawn abstractly to illustrate the communication between host computer 1910 and UE 1930 via base station 1920, without explicit reference to any intermediary devices and the precise routing of messages via these devices. Network infrastructure may determine the routing, which it may be configured to hide from UE 1930 or from the service provider operating host computer 1910, or both. While OTT connection 1950 is active, the network infrastructure may further take decisions by which it dynamically changes the routing (e.g., on the basis of load balancing consideration or reconfiguration of the network).

Wireless connection 1970 between UE 1930 and base station 1920 is in accordance with the teachings of the embodiments described throughout this disclosure. One or more of the various embodiments improve the performance of OTT services provided to UE 1930 using OTT connection 1950, in which wireless connection 1970 forms the last segment. More precisely, the teachings of these embodiments may improve data rate, resource efficiency, and device power consumption and thereby provide benefits such as relaxed restriction on file size and extended battery lifetime.

A measurement procedure may be provided for the purpose of monitoring data rate, latency and other factors on which the one or more embodiments improve. There may further be an optional network functionality for reconfiguring OTT connection 1950 between host computer 1910 and UE 1930, in response to variations in the measurement results. The measurement procedure and/or the network functionality for reconfiguring OTT connection 1950 may be implemented in software 1911 and hardware 1915 of host computer 1910 or in software 1931 and hardware 1935 of UE 1930, or both. In embodiments, sensors (not shown) may be deployed in or in association with communication devices through which OTT connection 1950 passes; the sensors may participate in the measurement procedure by supplying values of the monitored quantities exemplified above, or supplying values of other physical quantities from which software 1911, 1931 may compute or estimate the monitored quantities. The reconfiguring of OTT connection 1950 may include message format, retransmission settings, preferred routing etc.; the reconfiguring need not affect base station 1920, and it may be unknown or imperceptible to base station 1920. Such procedures and functionalities may be known and practiced in the art. In certain embodiments, measurements may involve proprietary UE signaling facilitating host computer 1910's measurements of throughput, propagation times, latency and the like. The measurements may be implemented in that software 1911 and 1931 causes messages to be transmitted, in particular empty or 'dummy' messages, using OTT connection 1950 while it monitors propagation times, errors etc.

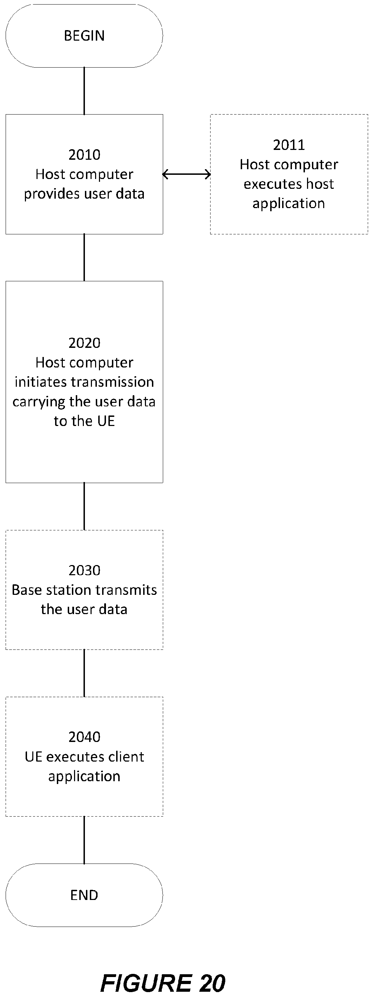

Figure 20 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 20 will be included in this section. In step 2010, the host computer provides user data. In substep 2011 (which may be optional) of step 2010, the host computer provides the user data by executing a host application. In step 2020, the host computer initiates a transmission carrying the user data to the UE. In step 2030 (which may be optional), the base station transmits to the UE the user data which was carried in the transmission that the host computer initiated, in accordance with the teachings of the embodiments described throughout this disclosure. In step 2040 (which may also be optional), the UE executes a client application associated with the host application executed by the host computer.

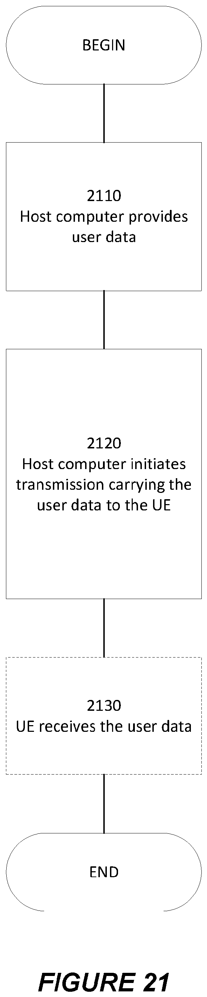

Figure 21 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 21 will be included in this section. In step 2110 of the method, the host computer provides user data. In an optional substep (not shown) the host computer provides the user data by executing a host application. In step 2120, the host computer initiates a transmission carrying the user data to the UE. The transmission may pass via the base station, in accordance with the teachings of the embodiments described throughout this disclosure. In step 2130 (which may be optional), the UE receives the user data carried in the transmission.

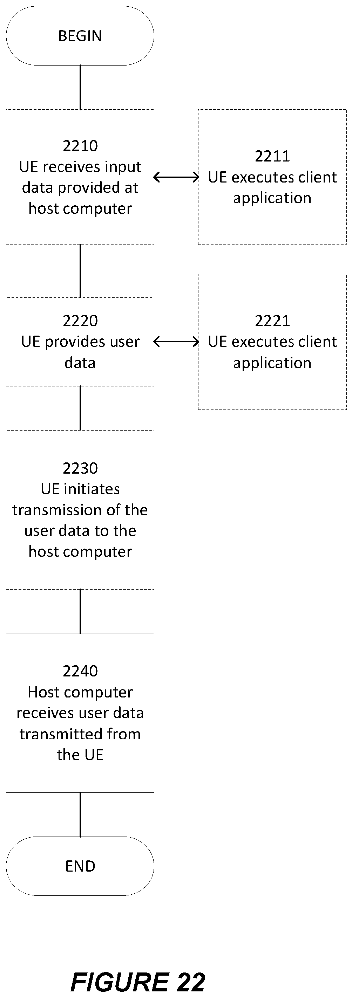

Figure 22 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 22 will be included in this section. In step 2210 (which may be optional), the UE receives input data provided by the host computer. Additionally or alternatively, in step 2220, the UE provides user data. In substep 2221 (which may be optional) of step 2220, the UE provides the user data by executing a client application. In substep 2211 (which may be optional) of step 2210, the UE executes a client application which provides the user data in reaction to the received input data provided by the host computer. In providing the user data, the executed client application may further consider user input received from the user. Regardless of the specific manner in which the user data was provided, the UE initiates, in substep 2230 (which may be optional), transmission of the user data to the host computer. In step 2240 of the method, the host computer receives the user data transmitted from the UE, in accordance with the teachings of the embodiments described throughout this disclosure.

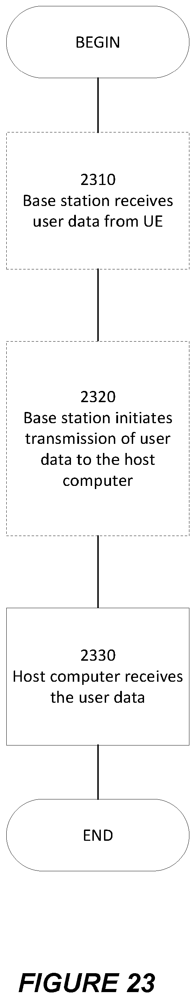

Figure 23 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 23 will be included in this section. In step 2310 (which may be optional), in accordance with the teachings of the embodiments described throughout this disclosure, the base station receives user data from the UE. In step 2320 (which may be optional), the base station initiates transmission of the received user data to the host computer. In step 2330 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

In view of the above, then, embodiments herein generally include a communication system including a host computer. The host computer may comprise processing circuitry configured to provide user data. The host computer may also comprise a communication interface configured to forward the user data to a cellular network for transmission to a user equipment (UE). The cellular network may comprise a base station having a radio interface and processing circuitry, the base station's processing circuitry configured to perform any of the steps of any of the embodiments described above for a base station.

In some embodiments, the communication system further includes the base station.

In some embodiments, the communication system further includes the UE, wherein the UE is configured to communicate with the base station.

In some embodiments, the processing circuitry of the host computer is configured to execute a host application, thereby providing the user data. In this case, the UE comprises processing circuitry configured to execute a client application associated with the host application.

Embodiments herein also include a method implemented in a communication system including a host computer, a base station and a user equipment (UE). The method comprises, at the host computer, providing user data. The method may also comprise, at the host computer, initiating a transmission carrying the user data to the UE via a cellular network comprising the base station. The base station performs any of the steps of any of the embodiments described above for a base station.

In some embodiments, the method further comprising, at the base station, transmitting the user data.

In some embodiments, the user data is provided at the host computer by executing a host application. In this case, the method further comprises, at the UE, executing a client application associated with the host application.

Embodiments herein also include a user equipment (UE) configured to communicate with a base station. The UE comprises a radio interface and processing circuitry configured to perform any of the embodiments above described for a UE.

Embodiments herein further include a communication system including a host computer. The host computer comprises processing circuitry configured to provide user data, and a communication interface configured to forward user data to a cellular network for transmission to a user equipment (UE). The UE comprises a radio interface and processing circuitry. The UE's components are configured to perform any of the steps of any of the embodiments described above for a UE.

In some embodiments, the cellular network further includes a base station configured to communicate with the UE.

In some embodiments, the processing circuitry of the host computer is configured to execute a host application, thereby providing the user data. The UE's processing circuitry is configured to execute a client application associated with the host application.

Embodiments also include a method implemented in a communication system including a host computer, a base station and a user equipment (UE). The method comprises, at the host computer, providing user data and initiating a transmission carrying the user data to the UE via a cellular network comprising the base station. The UE performs any of the steps of any of the embodiments described above for a UE.

In some embodiments, the method further comprises, at the UE, receiving the user data from the base station.

Embodiments herein further include a communication system including a host computer. The host computer comprises a communication interface configured to receive user data originating from a transmission from a user equipment (UE) to a base station. The UE comprises a radio interface and processing circuitry. The UE's processing circuitry is configured to perform any of the steps of any of the embodiments described above for a UE.

In some embodiments the communication system further includes the UE.

In some embodiments, the communication system further including the base station. In this case, the base station comprises a radio interface configured to communicate with the UE and a communication interface configured to forward to the host computer the user data carried by a transmission from the UE to the base station.

In some embodiments, the processing circuitry of the host computer is configured to execute a host application. And the UE's processing circuitry is configured to execute a client application associated with the host application, thereby providing the user data.

In some embodiments, the processing circuitry of the host computer is configured to execute a host application, thereby providing request data. And the UE's processing circuitry is configured to execute a client application associated with the host application, thereby providing the user data in response to the request data.

Embodiments herein also include a method implemented in a communication system including a host computer, a base station and a user equipment (UE). The method comprises, at the host computer, receiving user data transmitted to the base station from the UE. The UE performs any of the steps of any of the embodiments described above for the UE.

In some embodiments, the method further comprises, at the UE, providing the user data to the base station.

In some embodiments, the method also comprises, at the UE, executing a client application, thereby providing the user data to be transmitted. The method may further comprise, at the host computer, executing a host application associated with the client application.

In some embodiments, the method further comprises, at the UE, executing a client application, and, at the UE, receiving input data to the client application. The input data is provided at the host computer by executing a host application associated with the client application. The user data to be transmitted is provided by the client application in response to the input data.

Embodiments also include a communication system including a host computer. The host computer comprises a communication interface configured to receive user data originating from a transmission from a user equipment (UE) to a base station. The base station comprises a radio interface and processing circuitry. The base station's processing circuitry is configured to perform any of the steps of any of the embodiments described above for a base station.

In some embodiments, the communication system further includes the base station.

In some embodiments, the communication system further includes the UE. The UE is configured to communicate with the base station.

In some embodiments, the processing circuitry of the host computer is configured to execute a host application. And the UE is configured to execute a client application associated with the host application, thereby providing the user data to be received by the host computer.

Embodiments moreover include a method implemented in a communication system including a host computer, a base station and a user equipment (UE). The method comprises, at the host computer, receiving, from the base station, user data originating from a transmission which the base station has received from the UE. The UE performs any of the steps of any of the embodiments described above for a UE.

In some embodiments, the method further comprises, at the base station, receiving the user data from the UE.

In some embodiments, the method further comprises, at the base station, initiating a transmission of the received user data to the host computer.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art. The scope of protection is however defined by the appended set of claims.

## Claims

1. A method performed by a radio network node, the method comprising:
receiving, from a radio network node that controls a served cell, a message that includes a New Radio, NR, neighbour information Information Element, IE, the NR neighbour information IE indicating that an NR cell neighbouring the served cell can provide dual connectivity together with the served cell, wherein the NR neighbour information IE further indicates one or more of:
a transmission bandwidth supported by the NR cell;
sub-carrier spacing supported by the NR cell;
an average bitrate provided by the NR cell; or
a number of multiple-input-multiple-output, MIMO, layers supported by the NR cell.

2. The method of claim 1, wherein the radio network node is an eNodeB, wherein the served cell is a Long Term Evolution, LTE, cell, and wherein the dual connectivity comprises Evolved Universal Terrestrial Radio Access, E-UTRA, NR dual connectivity, EN-DC.

3. The method of any of claims 1-2, wherein the message is received from another radio network node that controls the served cell.

4. The method of any of claims 1-3, further comprising using the message to set up or update an interface between the radio network node and another radio network node that controls the served cell.

5. The method of any of claims 1-4, further comprising performing, by the radio network node, traffic steering based on the NR neighbour information IE.

6. The method of claim 5, wherein performing traffic steering based on the NR neighbour information IE comprises steering wireless devices capable of the dual connectivity to the served cell.

7. The method of any of claims 5-6, wherein performing traffic steering based on the NR neighbour information IE comprises steering wireless devices not capable of the dual connectivity to a different cell that does not have any NR cell neighbouring the different cell which can provide dual connectivity together with the different cell.

8. The method of any of claims 5-7, further comprising estimating whether a wireless device would benefit from the dual connectivity, and wherein performing traffic steering based on the NR neighbour information IE comprises steering the wireless device to the served cell if it is estimated that the wireless device would benefit from the dual connectivity.

9. A method performed by a radio network node configured to control a served cell, the method comprising:
transmitting, to another radio network node, a message that includes a New Radio, NR, neighbour information Information Element, IE, the NR neighbour information IE indicating that an NR cell neighbouring the served cell can provide dual connectivity together with the served cell, wherein the NR neighbour information IE further indicates one or more of:
a transmission bandwidth supported by the NR cell;
sub-carrier spacing supported by the NR cell;
an average bitrate provided by the NR cell; or
a number of multiple-input-multiple-output, MIMO, layers supported by the NR cell.

10. The method of claim 9, wherein the radio network node is an eNodeB, wherein the served cell is a Long Term Evolution, LTE, cell, and wherein the dual connectivity comprises Evolved Universal Terrestrial Radio Access, E-UTRA, NR dual connectivity, EN-DC.

11. The method of any of claims 9-10, wherein the message is transmitted to another radio network node.

12. The method of any of claims 9-11, further comprising performing a procedure to set up or update an interface between the radio network node and another radio network node, and wherein the message is transmitted as part of the procedure.

13. A radio network node configured to:
receive, from a radio network node configured to control a served cell, a message that includes a New Radio, NR, neighbour information Information Element, IE, the NR neighbour information IE indicating that an NR cell neighbouring the served cell can provide dual connectivity together with the served cell, wherein the NR neighbour information IE further indicates one or more of:
a transmission bandwidth supported by the NR cell;
sub-carrier spacing supported by the NR cell;
an average bitrate provided by the NR cell; or
a number of multiple-input-multiple-output, MIMO, layers supported by the NR cell.

14. The radio network node of claim 13, configured to perform the method of any of claims 2-8.

15. An radio network node configured to control a served cell, the radio network node configured to:
transmit, to another radio network node, a message that includes a New Radio, NR, neighbour information Information Element, IE, the NR neighbour information IE indicating that an NR cell neighbouring the served cell can provide dual connectivity together with the served cell, wherein the NR neighbour information IE further indicates one or more of:
a transmission bandwidth supported by the NR cell;
sub-carrier spacing supported by the NR cell;
an average bitrate provided by the NR cell; or
a number of multiple-input-multiple-output, MIMO, layers supported by the NR cell.

16. The radio network node of claim 15, configured to perform the method of any of claims 10-12.

17. A computer program comprising instructions which, when executed by at least one processor of an radio network node, causes the radio network node to carry out the method of any of claims 1-12.

18. A carrier containing the computer program of claim 17, wherein the carrier is one of an electronic signal, optical signal, radio signal, or computer readable storage medium.

## Patentansprüche

1. Verfahren, das von einem Funknetzwerkknoten durchgeführt wird, wobei das Verfahren Folgendes umfasst:
Empfangen einer Nachricht, die ein Informationselement, IE, von New Radio-Nachbarinformationen, NR-Nachbarinformationen, umfasst, von einem Funknetzwerkknoten, der eine bediente Zelle steuert, wobei das NR-Nachbarinformations-IE angibt, dass eine der bedienten Zelle benachbarte NR-Zelle zusammen mit der bedienten Zelle Dualkonnektivität bereitstellen kann, wobei das NR-Nachinformations-IE ferner eines oder mehrere von Folgenden angibt:
eine Übertragungsbandbreite, die von der NR-Zelle unterstützt wird;
einen Unterträgerabstand, der von der NR-Zelle unterstützt wird;
eine mittlere Bitrate, die von der NR-Zelle bereitgestellt wird; oder
eine Anzahl von Mehrfacheingangs-Mehrfachausgangs-Schichten, MIMO-Schichten, die von der NR-Zelle unterstützt wird.

2. Verfahren nach Anspruch 1, wobei der Funknetzwerkknoten ein eNodeB ist, wobei die bediente Zelle eine Long Term Evolution-Zelle, LTE-Zelle, ist und wobei die Dualkonnektivität Evolved Universal Terrestrial Radio Access, E-UTRA-,NR-Dualkonnektivität, EN-DC, umfasst.

3. Verfahren nach einem der Ansprüche 1-2, wobei die Nachricht von einem anderen Netzwerkknoten empfangen wird, der die bediente Zelle steuert.

4. Verfahren nach einem der Ansprüche 1-3, ferner umfassend Verwenden der Nachricht, um eine Schnittstelle zwischen dem Funknetzwerkknoten und einem anderen Netzwerkknoten, der die bediente Zelle steuert, einzurichten oder zu aktualisieren.

5. Verfahren nach einem der Ansprüche 1-4, ferner umfassend Durchführen von Verkehrslenkung durch den Funknetzwerkknoten basierend auf dem NR-Nachbarsinformations-IE.

6. Verfahren nach Anspruch 5, wobei das Durchführen von Verkehrslenkung basierend auf dem NR-Nachbarsinformations-IE Lenken von drahtlosen Vorrichtungen, die zur Dualkonnektivität in der Lage sind, zu der bedienten Zelle umfasst.

7. Verfahren nach einem der Ansprüche 5-6, wobei das Durchführen von Verkehrslenkung basierend auf dem NR-Nachbarsinformations-IE Lenken von drahtlosen Vorrichtungen, die nicht zur Dualkonnektivität in der Lage sind, zu einer anderen Zelle umfasst, die keine der anderen Zelle benachbarte NR-Zelle aufweist, die Dualkonnektivität zusammen mit der anderen Zelle bereitstellen kann.

8. Verfahren nach einem der Ansprüche 5-7, ferner umfassend Schätzen, ob eine drahtlose Vorrichtung von der Dualkonnektivität profitieren würde, und wobei das Durchführen von Verkehrslenkung basierend auf dem NR-Nachbarsinformations-IE Lenken der drahtlosen Vorrichtung zu der bedienten Zelle umfasst, falls geschätzt wird, dass die drahtlose Vorrichtung von der Dualkonnektivität profitieren würde.

9. Verfahren, das von einem Funknetzwerkknoten durchgeführt wird, der zum Steuern einer bedienten Zelle konfiguriert ist, wobei das Verfahren Folgendes umfasst:
Senden einer Nachricht, die ein Informationselement, IE, von New Radio-Nachbarinformationen, NR-Nachbarinformationen, umfasst, an einen anderen Funknetzwerkknoten, wobei das NR-Nachbarinformations-IE angibt, dass eine der bedienten Zelle benachbarte NR-Zelle zusammen mit der bedienten Zelle Dualkonnektivität bereitstellen kann, wobei das NR-Nachinformations-IE ferner eines oder mehrere von Folgenden angibt:
eine Übertragungsbandbreite, die von der NR-Zelle unterstützt wird;
einen Unterträgerabstand, der von der NR-Zelle unterstützt wird;
eine mittlere Bitrate, die von der NR-Zelle bereitgestellt wird; oder
eine Anzahl von Mehrfacheingangs-Mehrfachausgangs-Schichten, MIMO-Schichten, die von der NR-Zelle unterstützt wird.

10. Verfahren nach Anspruch 9, wobei der Funknetzwerkknoten ein eNodeB ist, wobei die bediente Zelle eine Long Term Evolution-Zelle, LTE-Zelle, ist und wobei die Dualkonnektivität Evolved Universal Terrestrial Radio Access, E-UTRA-,NR-Dualkonnektivität, EN-DC, umfasst.

11. Verfahren nach einem der Ansprüche 9-10, wobei die Nachricht an einen anderen Netzwerkknoten gesendet wird.

12. Verfahren nach einem der Ansprüche 9-11, ferner umfassend Durchführen einer Prozedur, um eine Schnittstelle zwischen dem Funknetzwerkknoten und einem anderen Netzwerkknoten einzurichten oder zu aktualisieren, und wobei die Nachricht als Teil der Prozedur gesendet wird.

13. Funknetzwerkknoten, der zu Folgendem konfiguriert ist:
Empfangen einer Nachricht, die ein Informationselement, IE, von New Radio-Nachbarinformationen, NR-Nachbarinformationen, umfasst, von einem Funknetzwerkknoten, der zum Steuern einer bedienten Zelle konfiguriert ist, wobei das NR-Nachbarinformations-IE angibt, dass eine der bedienten Zelle benachbarte NR-Zelle zusammen mit der bedienten Zelle Dualkonnektivität bereitstellen kann, wobei das NR-Nachinformations-IE ferner eines oder mehrere von Folgenden angibt:
eine Übertragungsbandbreite, die von der NR-Zelle unterstützt wird;
einen Unterträgerabstand, der von der NR-Zelle unterstützt wird;
eine mittlere Bitrate, die von der NR-Zelle bereitgestellt wird; oder
eine Anzahl von Mehrfacheingangs-Mehrfachausgangs-Schichten, MIMO-Schichten, die von der NR-Zelle unterstützt wird.

14. Funknetzwerkknoten nach Anspruch 13, konfiguriert zum Durchführen des Verfahrens nach einem der Ansprüche 2-8.

15. Funknetzwerkknoten, der zum Steuern einer bedienten Zelle konfiguriert ist, wobei der Funknetzwerkknoten zu Folgendem konfiguriert ist:
Senden einer Nachricht, die ein Informationselement, IE, von New Radio-Nachbarinformationen, NR-Nachbarinformationen, umfasst, an einen anderen Funknetzwerkknoten, wobei das NR-Nachbarinformations-IE angibt, dass eine der bedienten Zelle benachbarte NR-Zelle zusammen mit der bedienten Zelle Dualkonnektivität bereitstellen kann, wobei das NR-Nachinformations-IE ferner eines oder mehrere von Folgenden angibt:
eine Übertragungsbandbreite, die von der NR-Zelle unterstützt wird;
einen Unterträgerabstand, der von der NR-Zelle unterstützt wird;
eine mittlere Bitrate, die von der NR-Zelle bereitgestellt wird; oder
eine Anzahl von Mehrfacheingangs-Mehrfachausgangs-Schichten, MIMO-Schichten, die von der NR-Zelle unterstützt wird.

16. Funknetzwerkknoten nach Anspruch 15, konfiguriert zum Durchführen des Verfahrens nach einem der Ansprüche 10-12.

17. Computerprogramm, umfassend Anweisungen, die bei Ausführung durch mindestens einen Prozessor eines Funknetzwerkknotens den Funknetzwerkknoten zum Durchführen des Verfahrens nach einem der Ansprüche 1-12 veranlassen.

18. Datenträger, der das Computerprogramm nach Anspruch 17 enthält, wobei der Datenträger eines von einem elektronischen Signal, einem optischen Signal, einem Funksignal oder einem computerlesbaren Speichermedium ist.

## Revendications

1. Procédé réalisé par un nœud de réseau radio, le procédé comprenant,
la réception, depuis un nœud de réseau radio qui commande une cellule desservie, d'un message qui inclut un élément d'informations, IE, d'informations de voisins nouvelle radio, NR, l'IE d'informations de voisins NR indiquant qu'une cellule NR voisine de la cellule desservie peut fournir une connectivité double avec la cellule desservie, dans lequel l'IE d'informations de voisins NR indique en outre un ou plusieurs parmi :
une bande passante de transmission prise en charge par la cellule NR ;
un espacement de sous-porteuses pris en charge par la cellule NR ;
un débit binaire moyen fourni par la cellule NR ; et
un nombre de couches à entrées multiples et sorties multiples, MIMO, prises en charge par la cellule NR.

2. Procédé selon la revendication 1, dans lequel le nœud de réseau radio est un eNodeB, dans lequel la cellule desservie est une cellule d'évolution à long terme, LTE, et dans lequel la connectivité double comprend une connectivité double NR d'accès radio terrestre universel évolué, E-UTRA, EN-DC.

3. Procédé selon l'une quelconque des revendications 1 et 2, dans lequel le message est reçu depuis un autre nœud de réseau radio qui commande la cellule desservie.

4. Procédé selon l'une quelconque des revendications 1 à 3, comprenant en outre l'utilisation du message pour configurer ou mettre à jour une interface entre le nœud de réseau radio et un autre nœud de réseau radio qui commande la cellule desservie.

5. Procédé selon l'une quelconque des revendications 1 à 4, comprenant en outre la réalisation, par le nœud de réseau radio, d'une orientation de trafic sur la base de l'IE d'informations de voisins NR.

6. Procédé selon la revendication 5, dans lequel la réalisation d'une orientation de trafic sur la base de l'IE d'informations de voisins NR comprend l'orientation de dispositifs sans fil capables de la connectivité double vers la cellule desservie.

7. Procédé selon l'une quelconque des revendications 5 et 6, dans lequel la réalisation d'une orientation de trafic sur la base de l'IE d'informations de voisins NR comprend l'orientation de dispositifs sans fil non capables de la connectivité double vers une cellule différente qui n'a pas de cellule NR voisine de la cellule différente qui fournit une connectivité double avec la cellule différente.

8. Procédé selon l'une quelconque des revendications 5 à 7, comprenant en outre l'estimation si un dispositif sans fil bénéficierait de la connectivité double, et dans lequel la réalisation d'une orientation de trafic sur la base de l'IE d'informations de voisins NR comprend l'orientation du dispositif sans fil vers la cellule desservie s'il est estimé que le dispositif sans fil bénéficierait de la connectivité double.

9. Procédé réalisé par un nœud de réseau radio configuré pour commander une cellule desservie, le procédé comprenant :
la transmission, à un autre nœud de réseau radio, d'un message qui inclut un élément d'informations, IE, d'informations de voisins nouvelle radio, NR, l'IE d'informations de voisins NR indiquant qu'une cellule NR voisine de la cellule desservie peut fournir une connectivité double avec la cellule desservie, dans lequel l'IE d'informations de voisins NR indique en outre un ou plusieurs parmi :
une bande passante de transmission prise en charge par la cellule NR ;
un espacement de sous-porteuses pris en charge par la cellule NR ;
un débit binaire moyen fourni par la cellule NR ; et
un nombre de couches à entrées multiples et sorties multiples, MIMO, prises en charge par la cellule NR.

10. Procédé selon la revendication 9, dans lequel le nœud de réseau radio est un eNodeB, dans lequel la cellule desservie est une cellule d'évolution à long terme, LTE, et dans lequel la connectivité double comprend une connectivité double NR d'accès radio terrestre universel évolué, E-UTRA, EN-DC.

11. Procédé selon l'une quelconque des revendications 9 et 10, dans lequel le message est transmis à un autre nœud de réseau radio.

12. Procédé selon l'une quelconque des revendications 9 à 11, comprenant en outre la réalisation d'une procédure pour configurer ou mettre à jour une interface entre le nœud de réseau radio et un autre nœud de réseau radio, et dans lequel le message est transmis dans le cadre de la procédure.

13. Nœud de réseau radio configuré pour :
recevoir, depuis un nœud de réseau radio configuré pour commander une cellule desservie, un message qui inclut un élément d'informations, IE, d'informations de voisins nouvelle radio, NR, l'IE d'informations de voisins NR indiquant qu'une cellule NR voisine de la cellule desservie peut fournir une connectivité double avec la cellule desservie, dans lequel l'IE d'informations de voisins NR indique en outre un ou plusieurs parmi :
une bande passante de transmission prise en charge par la cellule NR ;
un espacement de sous-porteuses pris en charge par la cellule NR ;
un débit binaire moyen fourni par la cellule NR ; et
un nombre de couches à entrées multiples et sorties multiples, MIMO, prises en charge par la cellule NR.

14. Nœud de réseau radio selon la revendication 13, configuré pour réaliser le procédé selon l'une quelconque des revendications 2 à 8.

15. Nœud de réseau radio configuré pour commander une cellule desservie, le nœud de réseau radio étant configuré pour :
transmettre, à un autre nœud de réseau radio, un message qui inclut un élément d'informations, IE, d'informations de voisins nouvelle radio, NR, l'IE d'informations de voisins NR indiquant qu'une cellule NR voisine de la cellule desservie peut fournir une connectivité double avec la cellule desservie, dans lequel l'IE d'informations de voisins NR indique en outre un ou plusieurs parmi :
une bande passante de transmission prise en charge par la cellule NR ;
un espacement de sous-porteuses pris en charge par la cellule NR ;
un débit binaire moyen fourni par la cellule NR ; et
un nombre de couches à entrées multiples et sorties multiples, MIMO, prises en charge par la cellule NR.

16. Nœud de réseau radio selon la revendication 15, configuré pour réaliser le procédé selon l'une quelconque des revendications 10 à 12.

17. Programme informatique comprenant des instructions qui, lorsqu'elles sont exécutées par au moins un processeur d'un noeud de réseau radio, amènent le noeud de réseau radio à réaliser le procédé selon l'une quelconque des revendications 1 à 12.

18. Support contenant le programme informatique selon la revendication 17, dans lequel le support est l'un parmi un signal électronique, un signal optique, un signal radio et un support de stockage lisible par ordinateur.
